# EUROPEAN PATENT APPLICATION

(11) **EP 4 694 252 A1**
(43) Date of publication of application: **11.02.2026**
(21) Application number: 24779285.6
(22) Date of filing: 08.03.2024
(51) Int. Cl.: H04W 12/04, H04W 12/73, H04W 36/18, H04W 84/12

(54) **COMMUNICATION DEVICE AND COMMUNICATION METHOD**

(30) Priority: 31.03.2023 JP 2023057765
(71) Applicant: Sony Group Corporation, Tokyo 108-0075 (JP)
(72) Inventor: SUGAYA Shigeru, Tokyo 108-0075 (JP); TANAKA Yusuke, Tokyo 108-0075 (JP); AIO Kosuke, Tokyo 108-0075 (JP); HIRATA Ryuichi, Tokyo 108-0075 (JP)
(74) Representative: D Young & Co LLP
(86) International application number: PCT/JP2024/008954
(87) International publication number: WO 2024/203151

(57) **Abstract**

The present technology relates to a communication apparatus and a communication method that make it possible to perform seamless roaming.

A communication section that communicates with an access point that creates a wireless local-area-network (LAN) system; a management section that manages pieces of security-related information regarding a plurality of the access points connectable; and a roaming processing section that switches, upon roaming, the access point corresponding to a connection destination, using the pieces of security information managed by the management section, are included. The present technology is applied to, for example, a communication apparatus that can move in a wireless LAN system, and that performs communication while performing switching of an access point.

## Description

### Technical Field

The present technology relates to a communication apparatus and a communication method, and to, for example, a communication apparatus and a communication method that make it possible to perform seamless roaming.

### Background Art

In a wireless LAN system based on IEEE 802.11 standards, a wireless communication terminal conventionally uses an approach of securing connection established with one access point to perform communication. In recent years, standardization has been further progressed with widespread use of a wireless local-area-network (LAN) system, which enables a higher level of communication. Under the discussion about current IEEE 802.11be standards, an operation of multi-link operation in which a plurality of frequency bands is used in combination has been proposed. Patent Literature 1 proposes a multi-link roaming method.

### Citation List

### Patent Literature

Patent Literature 1: Japanese Unexamined Patent Application Publication No. 2022-546889

### Disclosure of Invention

### Technical Problem

When roaming is performed, there is a need to perform a plurality of processes such as association processing and an exchange of security-related information, and there is a possibility that, upon roaming processing, data communication will be temporarily interrupted, data will be non-contiguous, and there will be a delay in data transmission.

It is desirable that switching of a connection-destination access point be seamlessly performed.

The present technology has been made in view of the circumstances described above, and it is an object of the present technology to make it possible to perform switching of a connection destination seamlessly.

### Solution to Problem

A first communication apparatus according to an aspect of the present technology is a communication apparatus that includes a communication section that communicates with an access point that creates a wireless local-area-network (LAN) system; a management section that manages pieces of security information regarding a plurality of the access points connectable by the communication apparatus; and a roaming processing section that switches, upon roaming, the access point corresponding to a connection destination, using the pieces of security information managed by the management section.

A first communication method according to the aspect of the present technology is a communication method that is performed by a communication apparatus including a communication section that communicates with an access point that creates a wireless LAN system, the first communication method including: managing pieces of security information regarding a plurality of the access points connectable by the communication apparatus; and switching, upon roaming, the access point corresponding to a connection destination, using the pieces of managed security information.

A second communication apparatus according to an aspect of the present technology is a communication apparatus that includes a communication section that communicates with a communication apparatus that creates a wireless local-area-network (LAN) system; and a management section that manages pieces of security information regarding access points in response to a request being made by the wireless-LAN-system creating communication apparatus.

A second communication method according to the aspect of the present technology is a communication method that is performed by a communication apparatus that controls communication performed by an access point that creates a wireless LAN system, the communication method including managing pieces of security information regarding the access points in response to a request being made by the communication apparatus.

According to the first communication apparatus and second communication method according to the aspect of the present technology, communication is performed with an access point that creates a wireless LAN system; pieces of security information regarding a plurality of the access points connectable by the communication apparatus is managed; and the access point corresponding to a connection destination is switched upon roaming, using the pieces of managed security information.

According to the second communication apparatus and second communication method according to the aspect of the present technology, communication is performed with a communication apparatus that creates a wireless LAN system; and pieces of security information regarding access points are managed in response to a request being made by the wireless-LAN-system creating communication apparatus.

Note that the communication apparatus is an independent apparatus, or an internal block included in a single apparatus.

### Brief Description of Drawings

[Fig. 1] Fig. 1 illustrates an example of a configuration of an embodiment of a wireless LAN system to which the present technology is applied.
[Fig. 2] Fig. 2 illustrates an example of the configuration of the wireless LAN system.
[Fig. 3] Fig. 3 illustrates an example of the configuration of the wireless LAN system.
[Fig. 4] Fig. 4 illustrates an example of a configuration of a communication terminal.
[Fig. 5] Fig. 5 illustrates an example of a configuration of a wireless communication module.
[Fig. 6] Fig. 6 is a diagram used to describe first selection processing.
[Fig. 7] Fig. 7 is a diagram used to describe a configuration of an association frame.
[Fig. 8] Fig. 8 is a diagram used to describe a configuration of a seamless-roaming announcement frame.
[Fig. 9] Fig. 9 is a diagram used to describe a configuration of an authentication frame.
[Fig. 10] Fig. 10 is a diagram used to describe second selection processing.
[Fig. 11] Fig. 11 is a diagram used to describe processing related to generation of first security information.
[Fig. 12] Fig. 12 is a diagram used to describe processing related to generation of second security information.
[Fig. 13] Fig. 13 is a diagram used to describe processing related to generation of third security information.
[Fig. 14] Fig. 14 is a diagram used to describe processing performed when there is a change in AP group.
[Fig. 15] Fig. 15 is a diagram used to describe processing performed when there is a change in AP group.
[Fig. 16] Fig. 16 is a diagram used to describe an operation performed by a communication apparatus.
[Fig. 17] Fig. 17 is a diagram used to describe an operation performed by an entity.

### Mode(s) for Carrying Out the Invention

Modes for carrying out the present technology (hereinafter referred to as embodiments) will now be described below.

### <Configuration of Communication System>

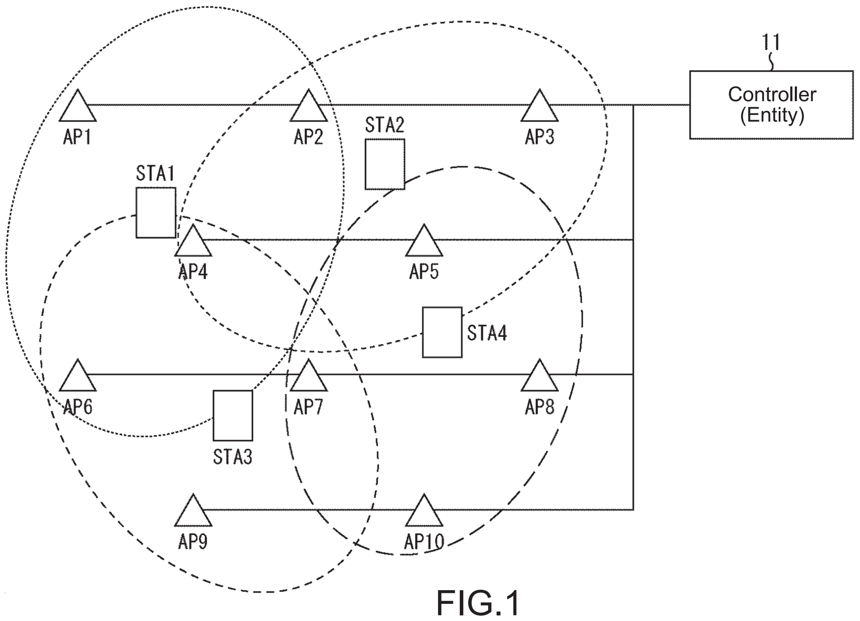

Fig. 1 illustrates an example of a configuration a wireless communication network using a wireless communication system to which the present technology is applied. Fig. 1 illustrates a configuration of a wireless local area network (LAN) system that is an example of the wireless communication system.

In the wireless LAN system illustrated in Fig. 1, access points AP1 to AP10 are connected to each other wirelessly or by wire to be capable of delivering data to each other, and are included in the same extended service set (ESS). The figure illustrates a configuration example in which communication apparatuses STA1 to STA4 are situated in a range of their ESS.

In the wireless LAN system illustrated in Fig. 1, the communication apparatus STA is configured to be capable of performing seamless roaming with a plurality of access points AP situated around the communication apparatus STA. Dashed lines illustrated in Fig. 1 each indicate a range in which the communication apparatus STA can be connected to the access points AP. This range is referred to as a connection-available range properly. When the communication apparatus STA can be connected to the access point AP, it means that a strength of radio waves exhibits a value greater than or equal to a specified value and that connection that makes it possible to keep a sufficient strength necessary to perform communication can be established. In other words, when the communication apparatus STA and the access point AP can be connected to each other but communication performed by the connection is unstable due to low strength of radio waves, the communication apparatus STA and the access point AP are not in a range in which connection can be established.

The access points AP1, AP2, AP4, and AP6 situated around the communication apparatus STA1 are in the connection-available range for the communication apparatus STA1. The communication apparatus STA1 shares security information with the access points AP1, AP2, AP4, and AP6, and is in a state of being capable of being seamlessly connected to these access points AP.

When, for example, the communication apparatus STA1 moves during communication with the access point AP1 and the communication partner of the communication apparatus STA1 is changed to the access point AP2, processing of newly establishing reconnection with the access point AP2 has been performed in the past. There is a possibility that, during the processing, connection will be broken, data will be non-contiguous, and there will be a delay in data transmission.

When, for example, the communication apparatus STA1 moves during communication with the access point AP1 and the communication partner of the communication apparatus STA1 is changed to the access point AP2, switching of a connection destination of the communication apparatus STA1 from the access point AP1 to the access point AP2 is performed seamlessly without performing processing of establishing reconnection with the access point AP2, as described later. This makes it possible to prevent breaking of the connection, non-contiguity of data, and a delay in data transmission upon switching of an access point AP.

In the wireless LAN system illustrated in Fig. 1, the access points AP2, AP3, AP4, and AP5 situated around the communication apparatus STA2 are in the connection-available range for the communication apparatus STA2. The communication apparatus STA2 shares security information with the access points AP2, AP3, AP4, and AP5, and is in a state of being capable of being seamlessly connected to these access points AP.

In the wireless LAN system illustrated in Fig. 1, the access points AP4, AP6, AP7, and AP9 situated around the communication apparatus STA3 are in the connection-available range for the communication apparatus STA3. The communication apparatus STA3 shares security information with the access points AP4, AP6, AP7, and AP9, and is in a state of being capable of being seamlessly connected to these access points AP.

In the wireless LAN system illustrated in Fig. 1, the access points AP5, AP7, AP8, and AP10 situated around the communication apparatus STA4 are in the connection-available range for the communication apparatus STA4. The communication apparatus STA4 shares security information with the access points AP5, AP7, AP8, and AP10, and is in a state of being capable of being seamlessly connected to these access points AP.

In the wireless LAN system illustrated in Fig. 1, the communication apparatus STA is connected to a plurality of access points AP situated around the communication apparatus STA to perform seamless roaming. The communication apparatus STA is configured to share, using an entity for access points AP (AP-MLD) that supports multi-link operation, security information with the access points AP situated in a range for the communication apparatus STA such that data transmission can be seamlessly performed with these access points AP.

In other words, when any access point AP is connected to the communication apparatus STA as an entity for access points AP that supports multi-link operation, the communication apparatus STA shares security-related information with a certain access point AP at the time of, for example, being associated with another access point AP with which the communication apparatus STA shares security information, the certain access point AP being connected to the access points AP under the entity. The communication apparatus STA can seamlessly roam to a roaming-destination access point AP without performing processing of exchanging security information, and keeps on performing seamless communication via another access point AP.

When there is a change in the access point AP situated around the communication apparatus STA1, a roaming-destination access point AP that has received a re-association request from a communication apparatus STA that newly wants to perform seamless roaming with access points around the communication apparatus STA, updates security information registered with an entity, and this results in performing communication via the roaming-destination access point AP in a short time.

Note that a range in which seamless connection can be established may be set to be, for example, a range of access points AP that are connected to each other through a cable and that have the same service set identifier (SSID) or an extended service set identifier (ESS), such that leakage of security-related information is minimized. In other words, a mechanism in which the adoption of a condition that security information is shared through a cable results in preventing the security information from leaking out, may be provided.

In the wireless LAN system illustrated in Fig. 1, a controller 11 includes an entity, and performs processing performed for the communication apparatus STA to perform seamless roaming with access points.

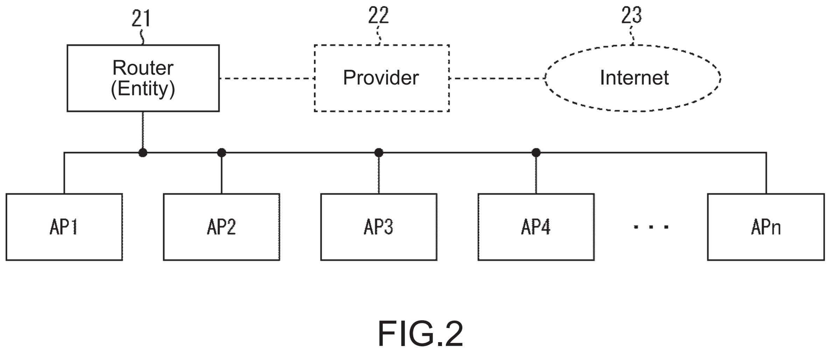

The example in which the controller 11 controlling the wireless LAN system (a plurality of access points AP in the wireless LAN system) is provided to the wireless LAN system illustrated in Fig. 1 and the controller 11 is provided with an entity has been described. As illustrated in Fig. 2, the entity may be provided to a router 21 to which a plurality of access points AP in the wireless LAN system is connected.

In an example of the configuration of the wireless LAN system illustrated in Fig. 2, a plurality of access points AP is connected to the router 21, where an entity is provided to the router 21 and the entity included in the router 21 manages the plurality of access points AP collectively. The router 21 is connected to the Internet 23 via a provider 22.

In the configuration illustrated in Fig. 2, parameters such as security-related information managed by an entity are managed by the router 21. The access point AP connected to the router 21 inquires of the router 21 about the information and uses the information as necessary.

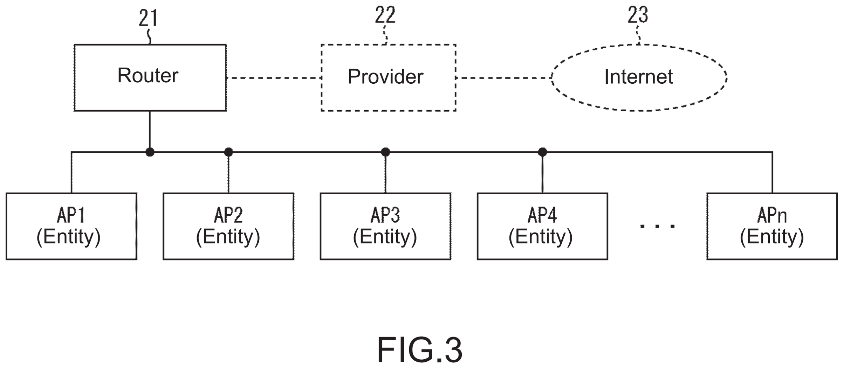

As illustrated in Fig. 3, each access point AP may also include an entity. In an example of the configuration of the wireless LAN system illustrated in Fig. 3, a plurality of access points AP is connected to the router 21, and each access point AP is provided with an entity.

In the configuration illustrated in Fig. 3, security information is managed by the entity included in each access point AP. Further, a mechanism in which the entity included in the access point AP shares security information for another access point AP, as necessary, is adopted.

When, without being limited to the configuration examples illustrated in Figs. 1 to 3, an entity stored in a server external to the wireless LAN system is acceptable, a seamlessly connectable access point AP may be limited to being in a range in which secure communication can be performed with the server.

### <Configurations of Communication Terminal and Access Point>

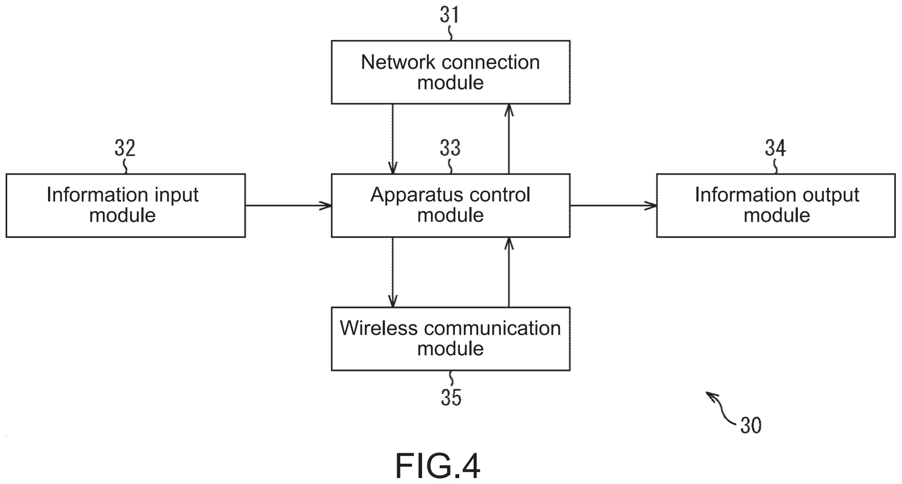

Fig. 4 is a block diagram of an example of a configuration of a communication terminal 30 to which the present technology is applied. The communication terminal 30 illustrated in Fig. 4 is a communication terminal 30 that is the access point AP or communication apparatus STA included in the wireless LAN system (Figs. 1 to 3), that is, a transmission-side or reception-side communication terminal 30.

In Fig. 4, the communication terminal 30 includes a network connection module 31, an information input module 32, an apparatus control module 33, an information output module 34, and a wireless communication module 35.

The network connection module 31 includes, for example, a circuit that serves as an access point AP and that includes a function used to connect an Internet network through a service provider from an optical fiber network or another communication line, a circuit peripheral to the circuit serving as an access point AP, a microcontroller, and a semiconductor memory.

The network connection module 31 performs various processes related to an Internet connection under the control of the apparatus control module 33. When, for example, the communication terminal 30 operates as an access point AP, the network connection module 31 is provided with a function such as a communication modem used to establish connection with an Internet network, and the Internet connection is established through a public communication line and an Internet service provider.

When the communication terminal 30 operates as an access point AP that does not include a router function, the network connection module 31 may be connected to another access point AP through a cable, and may be connected to an Internet network via the other access point AP serving as a router.

The information input module 32 includes input devices such as a push button, a keyboard, and a touchscreen. The information input module 32 includes a function used to input, to the apparatus control module 33, instruction information that corresponds to an instruction given by a user.

The apparatus control module 33 includes, for example, a microprocessor, a microcontroller, and a semiconductor memory. The apparatus control module 33 controls respective structural elements (modules) in order to operate the communication terminal 30 as an access point AP or a communication apparatus STA.

The apparatus control module 33 performs various processes on information supplied by the network connection module 31, the information input module 32, or the wireless communication module 35. The apparatus control module 33 supplies the network connection module 31, the information output module 34, or the wireless communication module 35 with information obtained as a result of the processes performed by the apparatus control module 33.

For example, the apparatus control module 33 supplies the wireless communication module 35 with transmission data delivered by, for example, an application in a protocol upper layer upon transmission of data, and delivers received data to, for example, an application in a protocol upper layer, the received data being supplied by the wireless communication module 35 upon reception of data.

The information output module 34 includes a display element such as a liquid crystal display, an organic EL display, or a light-emitting diode (LED) display device, and an output device that includes a speaker that outputs sound or music.

The information output module 34 includes a function to display necessary information to a user on the basis of information supplied by the apparatus control module 33. Here, examples of the information processed by the information output module 34 include an operation state of the communication terminal 30 and information obtained through an Internet network.

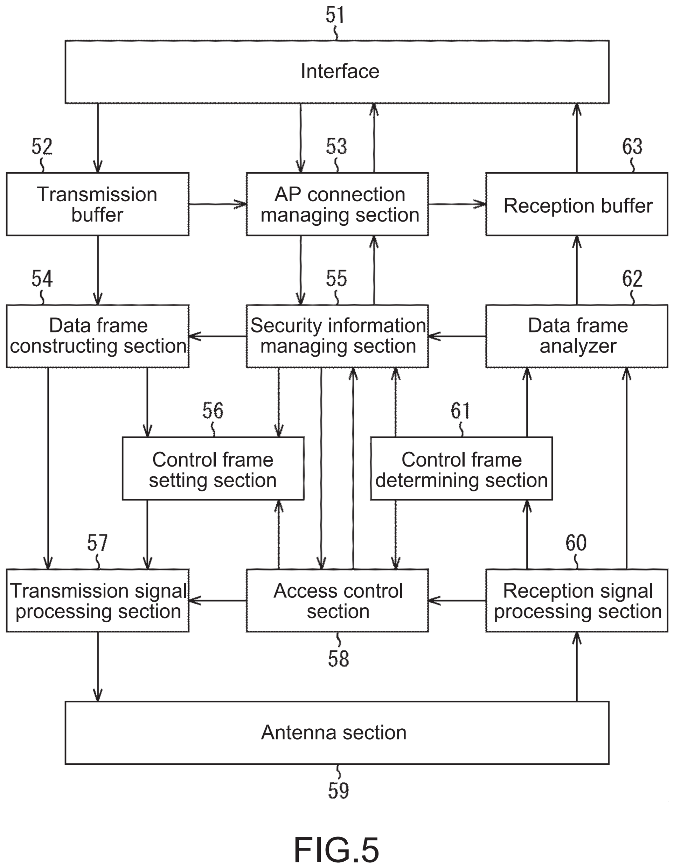

The wireless communication module 35 includes, for example, a wireless chip, a peripheral circuit, a microcontroller, and a semiconductor memory. The wireless communication module 35 performs various processes related to wireless communication under the control of the apparatus control module 33. The configuration of the wireless communication module 35 will be described in detail later with reference to Fig. 5.

Note that, here, a wireless communication module that includes, for example, a wireless communication chip and a peripheral circuit is described as an example. However, the present technology is not limited to being applied to the wireless communication module, and may be applied to, for example, a wireless communication chip and a wireless communication LSI. Further, the wireless communication module may include an antenna discretionarily.

Further, in the communication terminal 30 illustrated in Fig. 4, the apparatus control module 33 and the wireless communication module 35 are indispensable structural elements, but modules other than the apparatus control module 33 and the wireless communication module 35, that is, the network connection module 31, the information input module 32, and the information output module 34 may be included in structural elements discretionarily.

In other words, each communication terminal 30 operating as an access point AP or a communication apparatus STA may only include a necessary module, and an unnecessary portion may be simplified or no unnecessary portion may be incorporated.

More specifically, for example, the network connection module 31 may only be incorporated into an access point AP, and the information input module 32 and the information output module 34 may only be incorporated into a communication apparatus STA.

### <Example of Configuration of Wireless Communication Module>

Fig. 5 is a block diagram of an example of the configuration of the wireless communication module 35 illustrated in Fig. 4.

The wireless communication module 35 illustrated in Fig. 5 includes an interface 51, a transmission buffer 52, an AP connection managing section 53, a data frame constructing section 54, a security information managing section 55, a control frame setting section 56, a transmission signal processing section 57, an access control section 58, and an antenna section 59. The wireless communication module 35 includes a reception signal processing section 60, a control frame determining section 61, a data frame analyzer 62, and a reception buffer 63.

The interface 51 is connected to the apparatus control module 33 illustrated in Fig. 4, and exchanges various information and data with the apparatus control module 33. The interface 51 supplies the transmission buffer 52 with transmission data supplied by the apparatus control module 33. The interface 51 exchanges various information with the AP connection managing section 53. The interface 51 supplies the apparatus control module 33 with received data supplied by the reception buffer 63.

The transmission buffer 52 temporarily stores therein transmission data supplied by the interface 51. When the transmission buffer 52 stores therein, as transmission data, control data necessary to establish connection with an access point AP, the transmission buffer 52 reports to the AP connection managing section 53 about the presence of connection data. The transmission buffer 52 supplies stored transmission data to the data frame constructing section 54.

The AP connection managing section 53 exchanges various information with the interface 51 and refers to the report supplied by the transmission buffer 52 to manage information used to perform seamless roaming described later.

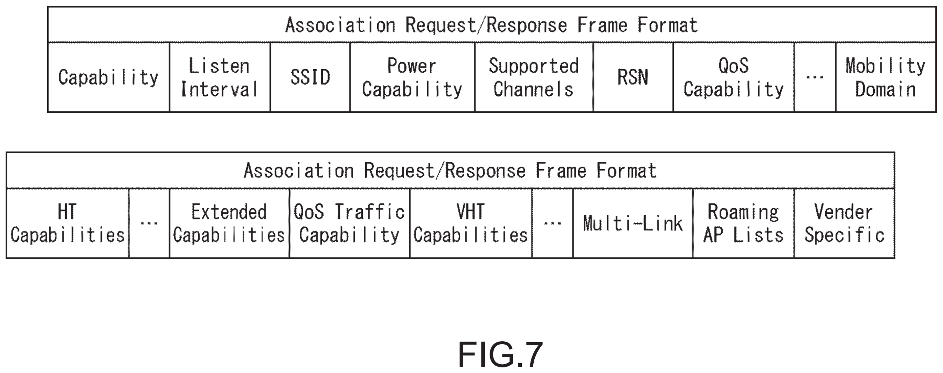

In response to an instruction being given by the security information managing section 55, the data frame constructing section 54 constructs, at a specified timing, a data frame of transmission data supplied by the transmission buffer 52. Examples of the data frame include an association frame and an authentication frame that will be described late with reference to Figs. 7 to 9.

The security information managing section 55 exchanges information with the AP connection managing section 53 and the access control section 58 and refers to information supplied by the control frame determining section 61 and to a report supplied by the data frame analyzer 62 to manage security-related information, such as a pairwise transient key (PTK) and a group temporal key (GTK), that is information used to perform seamless roaming. The security information managing section 55 manages security information regarding a plurality of access points AP (grouped access points (an AP group)), as described later.

The security information managing section 55 gives the data frame constructing section 54 an instruction to construct a data frame at a specified timing. The security information managing section 55 gives the control frame setting section 56 an instruction to construct a control frame at a specified timing.

The control frame setting section 56 generates frames such as an association frame and an authentication frame at a specified timing on the basis of an instruction given by the security information managing section 55 and reports made by the data frame constructing section 54 and the access control section 58. The control frame setting section 56 supplies a control frame to the transmission signal processing section 57.

The transmission signal processing section 57 performs, for example, encoding processing on a data frame supplied by the data frame constructing section 54 and a control frame supplied by the control frame setting section 56 to generate encoded data. The transmission signal processing section 57 controls transmission of the encoded data by supplying the encoded data to the antenna section 59 at a specified timing on the basis of an instruction given by the access control section 58.

The access control section 58 generates a frame supplied by the AP connection managing section 53 through the security information managing section 55, and supplies the frame to the transmission signal processing section 57. Through the security information managing section 55, the access control section 58 supplies the AP connection managing section 53 with a frame supplied by the reception signal processing section 60. On the basis of pieces of information supplied by the reception signal processing section 60 and the control frame determining section 61, the access control section 58 inputs an instruction to the transmission signal processing section 57 to perform access control necessary to transmit encoded data.

The antenna section 59 transmits a radio signal of encoded data supplied by the transmission signal processing section 57. The antenna section 59 receives (detects) a radio signal of encoded data of a data frame and a control frame that are transmitted by another access point AP and a communication apparatus STA1, and supplies the encoded data to the reception signal processing section 60.

The reception signal processing section 60 controls reception of encoded data that is performed by the antenna section 59. The reception signal processing section 60 performs, for example, decoding processing on the encoded data supplied by the antenna section 59, and extracts frames such as a data frame and a control frame. The reception signal processing section 60 supplies the control frame to the control frame determining section 61, and supplies the data frame to the data frame analyzer 62.

The control frame determining section 61 extracts information included in a control frame supplied by the reception signal processing section 60. The control frame determining section 61 supplies the information to the security information managing section 55, the data frame analyzer 62, and the access control section 58 as necessary.

The data frame analyzer 62 extracts data included in a data frame supplied by the reception signal processing section 60, and supplies the data to the reception buffer 63. The data frame analyzer 62 supplies a report about received data to the security information managing section 55.

The reception buffer 63 temporarily stores therein received data supplied by the data frame analyzer 62. The reception buffer 63 outputs the stored received data to the interface 51 in response to an instruction being given by the AP connection managing section 53.

In the wireless communication module 35 illustrated in Fig. 5, transmission of a data frame and a control frame is controlled on the basis of control performed by the access control section 58. This makes it possible to successively monitor to use a state of a transmission line.

The reception signal processing section 60, the control frame determining section 61, the data frame analyzer 62, and the reception buffer 63 are shared portions of a wireless communication apparatus, where the reception signal processing section 60 extracts information corresponding to a frame from a signal, in the wireless LAN system, that is received through the antenna section 59, the control frame determining section 61 extracts a control frame extracted by the reception signal processing section 60, the data frame analyzer 62 extracts a data frame from a received frame, and the reception buffer 63 temporarily stores therein received data.

Portions included in the wireless communication module 35 illustrated in Fig. 5 and other than the antenna section 59 may be formed into one chip (one module), and the antenna section 59 may be formed outside of the module. Further, the interface 51 may be formed outside of the module.

A portion being included in the wireless communication module 35 illustrated in Fig. 5 and corresponding to an entity may be formed into a portion that corresponds to the AP connection managing section 53 and the security information managing section 55.

When an entity is provided to the controller 11, as in the case of the wireless LAN system illustrated in Fig. 1, the controller 11 includes the AP connection managing section 53 and the security information managing section 55.

When, for example, an entity is provided to the router 21 connected to an Internet network, as in the case of the wireless LAN system illustrated in Fig. 2, the router 21 includes the AP connection managing section 53 and the security information managing section 55 as portions corresponding to the entity, and the AP connection managing section 53 and the security information managing section 55 are activated to manage the information.

When the communication terminal 30 does not include an entity and the entity is formed outside through the router, only functions of an access point AP and the router 21 may be included, and, with respect to, for example, security-related information, operation may be performed on the basis of parameters reported from the outside.

### <First Selection Processing Related to Selection of Access Point AP>

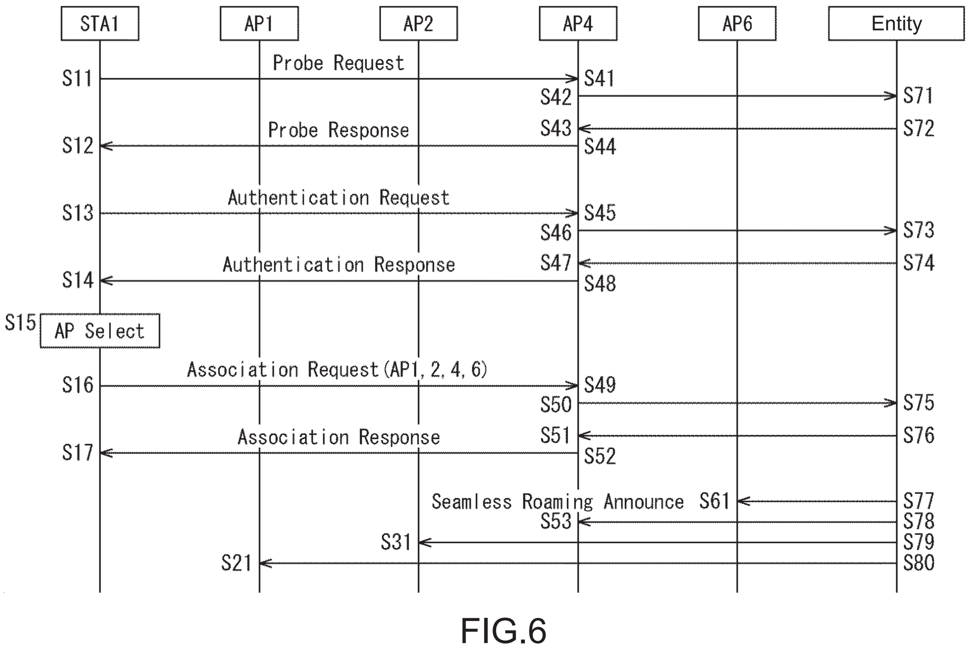

In order to perform seamless roaming, as described with reference to Fig. 1, the communication apparatus STA shares security information with a plurality of access points AP. Processing related to selection of a plurality of access points AP (hereinafter referred to as an AP group properly) with which security information is shared, is described with reference to Fig. 6.

Fig. 6 is a flowchart used to describe first selection processing related to selection of the access points AP (an AP group). Processing performed when there are the communication apparatus STA1, and the access points AP1, AP2, AP4, and AP6 situated around the communication apparatus STA1 (the state illustrated in Fig. 1) is described below as an example.

In the following description, the entity is referred to as an entity 101. With respect to the configuration of the entity 101, the entity 101 is included in the controller 11, as illustrated in Fig. 1, the entity 101 is included in the router 21, as illustrated in Fig. 2, or the entity 101 is included in each access point AP, as illustrated in Fig. 3. Basic processing is performed as described below in any of the configurations.

In Step S11, the communication apparatus STA1 transmits a probe request to the entity 101 through the access point AP4 in order to search for an access point AP with which connection is desired to be established. When the process of Step S11 is performed, the communication apparatus STA1 is connected to the access point AP4 and is communicating with the access point AP4. Thus, the probe request is transmitted to the access point AP4.

When the access point AP4 receives the probe request from the communication apparatus STA1 in Step S41, the access point AP4 transfers the request to the entity 101 in Step S42. When the entity 101 receives, in Step S71, the probe request transmitted by the communication apparatus STA1 and transferred by the access point AP4, the entity 101 transmits a probe response to the communication apparatus STA1 through the access point AP4 in Step S72.

When the access point AP4 receives the probe response from the entity 101 in Step S43, the access point AP4 transfers the response to the communication apparatus STA1 in Step S44. The communication apparatus STA1 receives, in Step S12, the probe response transferred by the access point AP4. When the communication apparatus STA1 receives the probe response, the communication apparatus STA1 moves on to an authentication procedure.

The communication apparatus STA1 transmits an authentication request to the entity 101 through the access point AP4 in Step S13. When the access point AP4 receives the authentication request from the communication apparatus STA1 in Step S45, the access point AP4 transfers the request to the entity 101 in Step S46.

When the entity 101 receives, in Step S73, the authentication request transmitted by the communication apparatus STA1 and transferred by the access point AP4, the entity 101 transmits an authentication response to the communication apparatus STA1 through the access point AP4 in Step S74.

When the access point AP4 receives the authentication response from the entity 101 in Step S47, the access point AP4 transfers the response to the communication apparatus STA1 in Step S48. The communication apparatus STA1 receives, in Step S14, the authentication response transferred by the access point AP4.

When the communication apparatus STA1 receives the authentication response, the communication apparatus STA1 selects (AP Select), in Step S15, a plurality of access points AP (an AP group) with which connection is desired to be established. For example, the communication apparatus STA1 selects four access points AP in descending order of reception strength. Here, the reception strength is described as an example. However, criteria other than the reception strength may be adopted as selection criteria.

When, for example, a positional relationship between the communication apparatus STA1 and the access point AP is known, an access point AP that is in a specified range centered on the communication apparatus STA1 may be selected. Further, the example in which four access points AP are selected continues to be described here. However, four or less access point APs, or four or more access point APs may be selected. For example, setting may be performed such that an access point AP with a reception strength exhibiting a specified value or more is selected. In this case, as many access points AP as the number of access points AP with a reception strength exhibiting a specified value or more are selected. Thus, there is no limitation on the number of access points AP selected (Of course, an upper limit may be set in advance).

It is assumed that the communication apparatus STA1 selects, in Step S15, the access points AP1, AP2, AP4, and AP6 as access points AP with which connection is desired to be established. When such selection is performed, the communication apparatus STA1 transmits an association request to the entity 101 through the access point AP4 in Step S16. The association request transmitted by the communication apparatus STA1 includes a list of access points AP with which connection is desired to be established. In this case, an association request including a list that includes the access points AP1, AP2, AP4, and AP6 is transmitted.

Fig. 7 illustrates an example of a format of a frame of an association request / association response (an association request/response frame). The association frame includes parameters such as Capability indicating a capability of each communication apparatus, Listen Interval indicating a time interval adopted when a low power consumption operation is performed, SSID used to identify a service set, Power Capability used to identify the strength of power of an apparatus, Supported Channels indicating channels to be supported, RSN indicating information regarding a robust security network, and QoS Capability indicating a QoS capability.

The association frame further includes parameters such as Mobility Domain indicating a range in which movement is performed, HT Capabilities indicating capabilities of HT standards, Extended Capabilities indicating extended capabilities, QoS Traffic Capability indicating traffic corresponding to the QoS, VHT Capabilities indicating capabilities of VHT standards, and Multi-Link indicating multi-link operation.

When the association frame further includes information regarding a plurality of access points AP with which seamless roaming is desired to be performed, the association frame also includes Roaming AP Lists indicating a list of access points AP with which seamless roaming is desired to be performed. A list of connectable access points AP and a list of access points AP with which connection is actually desired to be established are written into Roaming AP Lists.

From among those pieces of information, for example, Mobility Domain may include whether it is necessary to support a seamless-roaming operation including access points AP situated around the communication apparatus. Information regarding an access point AP with which connection is established may be included as, for example, Multi-Link. The various pieces of information may be defined as parameters in Vender Specific as necessary.

Such an association request and such a response are delivered between the communication apparatus STA1 and the entity 101.

Returning to the description made with reference to Fig. 6. In Step S16, the communication apparatus STA1 transmits, to the entity 101, an association request, as described with reference to Fig. 7, that includes information regarding access points AP with which seamless roaming is desired to be performed.

When the access point AP4 receives the association request from the communication apparatus STA1 in Step S49, the access point AP4 transfers the request to the entity 101 in Step S50.

When the entity 101 receives, in Step S75, the association request transmitted by the communication apparatus STA1 and transferred by the access point AP4, the entity 101 transmits an association response to the communication apparatus STA1 through the access point AP4 in Step S76.

When the access point AP4 receives, in Step S51, the association response from the entity 101, the access point AP4 transfers the response to the communication apparatus STA1 in Step S52. The communication apparatus STA1 receives, in Step S17, the association response transferred by the access point AP4. In the case of this example, the communication apparatus STA1 has made a connection request for connection established with the access points AP1, AP2, AP4, and AP6, and the communication apparatus STA1 is in a state in which the connection request for connection established with the access points AP1, AP2, AP4, and AP6 has been accepted.

When the entity 101 receives, from the communication apparatus STA1, an access request for access to a plurality of access points AP, the entity 101 transmits an association response to the communication apparatus STA1, and performs processing of reporting to each of the plurality of access points AP to which access is requested by the communication apparatus STA1 about the access request made by the communication apparatus STA1. In this case, the report is transmitted to each of the access points AP1, AP2, AP4, and AP6.

In Step S77, the entity 101 transmits, to the access point AP6, a seamless roaming announcement (Seamless Roaming Announce) that is a report used to set a seamless connection. In Step S61, the access point AP6 receives the seamless roaming announcement from the entity 101 to receive, from the communication apparatus STA1, a report indicating that the seamless roaming has been set.

In Step S78, the entity 101 transmits, to the access point AP4, the seamless roaming announcement used to set a seamless connection. In Step S53, the access point AP4 receives the seamless roaming announcement from the entity 101 to receive, from the communication apparatus STA1, a report indicating that the seamless roaming has been set.

In Step S79, the entity 101 transmits, to the access point AP2, the seamless roaming announcement used to set a seamless connection. In Step S31, the access point AP2 receives the seamless roaming announcement from the entity 101 to receive, from the communication apparatus STA1, a report indicating that the seamless roaming has been set.

In Step S80, the entity 101 transmits, to the access point AP1, the seamless roaming announcement used to set a seamless connection. In Step S21, the access point AP1 receives the seamless roaming announcement from the entity 101 to receive, from the communication apparatus STA1, a report indicating that the seamless roaming has been set.

Note that the example in which the announcements are separately transmitted in Steps S77 to S80 has been described in order to facilitate understanding of the description. However, a single announcement may be transmitted to a plurality of destinations at a time. Likewise, reports to be transmitted to a plurality of destinations may be collectively transmitted in the form of a single report in the following descriptions.

When, for example, access points AP with which seamless roaming can be performed are connected to each other through a cable, setting may be performed such that the fact that the seamless roaming can be performed with the access points AP may be reported as announcement information that is exchanged between the access points AP, and a seamless roaming announcement may be transmitted when such a report is made.

As described above, the communication apparatus STA reports to a plurality of access points AP (an AP group) that a seamless connection is to be set, and each of the plurality of access points AP to which the report has been made recognizes that the seamless connection has been set.

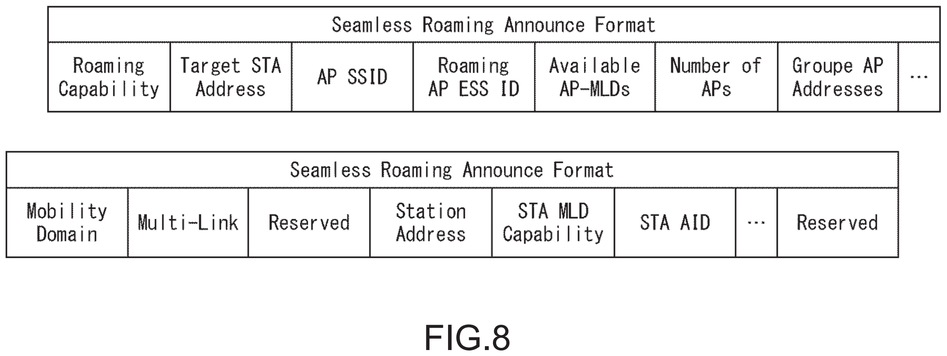

Fig. 8 illustrates an example of a format of a seamless roaming announcement (Seamless Roaming Announce Format). Examples of announcement information included in the seamless roaming announcement include Roaming Capability indicating a roaming capability, Target STA Address indicating an address of a target communication apparatus STA, AP SSID indicating an SSID of an access point AP, Roaming AP ESS ID indicating ESS information indicating a roaming range, Available AP-MLD indicating an available entity 101, Number of APs indicating the number of connectable access points AP, and Groupe AP Address indicating a group address of access points AP.

Further, information included in Mobility Domain and Multi-Link may be exchangeable as necessary, and Fig. 8 illustrates an example in which such information is further included. Furthermore, a Reserved field may be provided for a future extension.

Fig. 8 illustrates an example of the seamless roaming announcement also including parameters for the communication apparatus STA making a request for seamless roaming, where examples of the parameters include STA Address indicating an address of the communication apparatus STA, STA MLD Capability indicating a capability of the communication apparatus STA in multi-link, and STA AID indicating an AID identifier of the communication apparatus STA. In addition, a Reserved field may be provided for a future extension.

Fig. 8 illustrates the example of the seamless roaming announcement format. This example does not mean limitations, and, for example, a format that includes at least one of the pieces of information included in the seamless roaming announcement format illustrated in Fig. 8 may be used. In other words, what information is included in the seamless roaming announcement format can be set properly, and is not limited to the example illustrated in Fig. 8.

Further, the parameters may be reported after the number of the parameters is increased or reduced as necessary, or a missing parameter may be reported in each case if any.

In the example illustrated in Fig. 6, the communication apparatus STA1 is logically connected between a plurality of access points AP and the entity 101. Further, in the example described above, parameters for a plurality of access points AP are exchanged using the access point AP4. For example, parameters for the access points AP situated around the communication apparatus STA1 may be collected by a probe request and a probe response being communicated alternately. Alternatively, parameters for the access points AP situated around the communication apparatus STA1 may be collected by an authentication request and an authentication response being communicated alternately.

In the example illustrated in Fig. 6, the following has been described as an example of the case in which the communication apparatus STA1 selects a plurality of access points (an AP group) with which seamless connection is desired to be established: access points (the access points AP1, AP2, AP4, and AP6) situated around the communication apparatus STA1 are selected, and a request for connection established with the selected access points is made to the entity 101 through, for example, the access point AP4 from among the selected access points AP.

The access point AP4 receives a connection request for the entity 101 from the communication apparatus STA1. However, when the entity 101 is situated in the access point AP4, as in the case of, for example, Fig. 3, the connection request may also be recognized in the access point AP4.

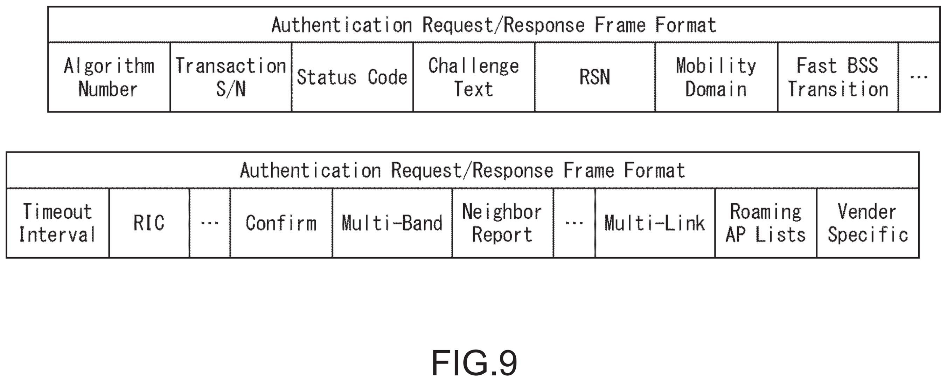

In the processing example illustrated in Fig. 6, the example in which a plurality of access points AP (an AP group) with which seamless roaming is desired to be performed is specified using an association request, has been described. An AP group may be specified using an authentication request that is made before the association request. An example of a configuration of a frame that is transmitted and received when an AP group is specified using an authentication request is described with reference to Fig. 9.

In an example of a configuration of an authentication request/response frame illustrated in Fig. 9, the frame includes Algorithm Number indicating an algorithm number, Transaction S/N indicating a transaction sequence number, Status Code indicating a state, Challenge Text indicating a text on which challenging is performed, and RSN indicating information regarding a robust security network.

Further, the authentication frame illustrated in Fig. 9 also includes parameters such as Mobility Domain indicating a range in which movement is performed, Fast BSS Transition indicating a fast BSS transition, Timeout Interval indicating a timeout interval, RIC indicating an intelligent controller, Confirm indicating a confirmation, Multi-Band indicating a multi-band support, Neighbor Report indicating a surrounding state, and Multi-Link indicating a multi-link operation.

When the authentication frame further includes information regarding a plurality of access points AP with which seamless roaming is desired to be performed, the association frame is also provided with Roaming AP Lists indicating a list of access points AP with which seamless roaming is desired to be performed. A list of connectable access points AP and a list of access point AP with which connection is actually desired to be established are written into Roaming AP Lists.

From among those pieces of information, for example, Mobility Domain may include whether it is necessary to support a seamless-roaming operation including access points AP situated around the communication apparatus. Information regarding an access point AP with which connection is established may be included as, for example, Multi-Link. The various pieces of information may be defined as parameters in Vender Specific as necessary.

A plurality of access points AP may be specified (an AP group may be specified) by such an authentication request and such an authentication response being delivered between the communication apparatus STA1 and the entity 101.

A plurality of access points AP may be specified (an AP group may be specified) by a probe request and a probe response being communicated alternately, although this is not illustrated.

### <Second Selection Processing Related to Selection of Access Point AP>

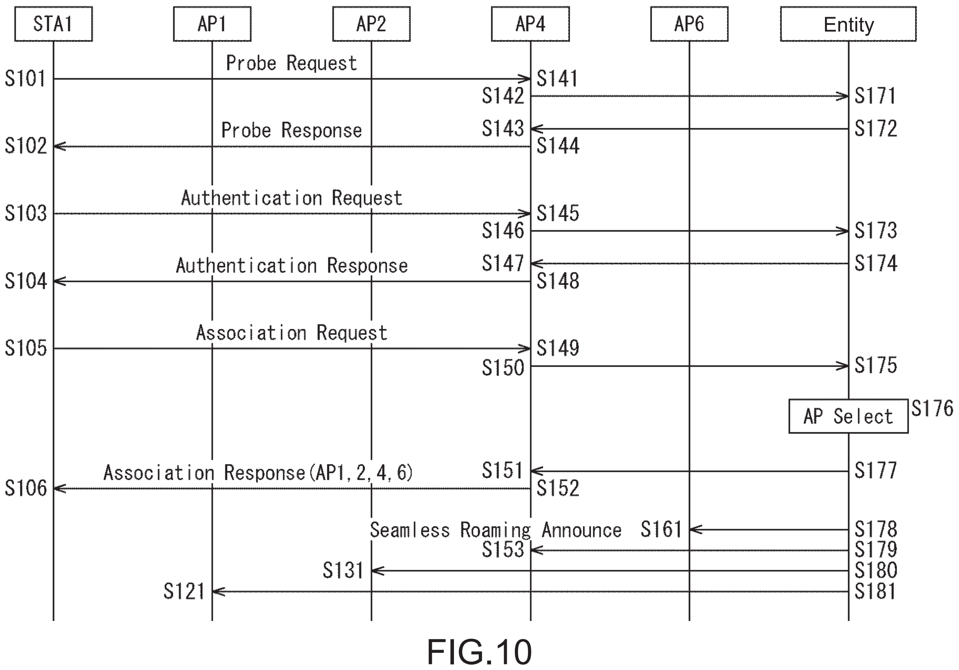

Fig. 10 is a flowchart used to describe second selection processing related to selection of access points AP (an AP group).

Processes performed by the communication apparatus STA1 in Steps S101 to S104 are similar to the processes of Steps S11 to S14 (Fig. 6), processes performed by the access point AP4 in Steps S141 to S148 are similar to the processes of Steps S41 to S48 (Fig. 6), and processes performed by the entity 101 in Steps S171 to S174 are similar to the processes of Steps S71 to S74 (Fig. 6). Thus, descriptions thereof are omitted. When these processes are performed to terminate processes performed for a probe request and a probe response and processes performed for an authentication request and an authentication response, the process moves on to Step S105.

In Step S105, the communication apparatus STA1 transmits an association request to the entity 101 through the access point AP4. When the access point AP4 receives the association request from the communication apparatus STA1 in Step S149, the access point AP4 transfers the request to the entity 101 in Step S150.

When the entity 101 receives, in Step S175, the association request transmitted by the communication apparatus STA1 and transferred by the access point AP4, the entity 101 selects (AP Select), in Step S176, a plurality of access points AP (an AP group) with which seamless roaming is to be performed. For example, the entity 101 acquires, from the communication apparatus STA1, a list regarding a reception strength of reception by the communication apparatus STA1 from an access point AP, and selects an AP group on the basis of the list. In this case, for example, four access points AP are selected in descending order of reception strength.

When the list regarding the reception strength is acquired from the communication apparatus STA1, such a list is acquired at a timing prior to Step S176. For example, the frame described with reference to Fig. 7 may be applied as a frame of an association request, and the reception-strength list may be written into Roaming AP Lists. Alternatively, the frame described with reference to Fig. 9 may be applied as a frame of an authentication request, and the reception-strength list may be written into Roaming AP Lists. Alternatively, the reception-strength list may be transmitted upon making a probe request.

As another selection method, access points AP may be grouped in advance, and an AP group may be selected using information regarding the grouping. For example, when the access points AP1, AP2, AP4, and AP6 are grouped into an AP group A and when an association request from the communication apparatus STA1 is transmitted through the access point AP4, the entity 101 selects the AP group A in the process of selecting access points AP in Step S176.

Examples of a method for grouping access points AP include a method including classifying access points AP in the same floor into one group; and a method including dividing one floor into regions and classifying access points AP in one region into one group.

The entity 101 selects, in Step S176, access points AP with which the communication apparatus STA1 wants seamless connection to be established. Here, the example in which the access points AP1, AP2, AP4, and AP6 are selected continues to be described.

The entity 101 transmits an association response to the communication apparatus STA1 through the access point AP4 in Step S177. The association request transmitted by the entity 101 includes a list of access points AP selected (an AP group). In this case, an association response that includes a list including the access points AP1, AP2, AP4, and AP6 is transmitted.

When the access point AP4 receives the association response from the entity 101 in Step S151, the access point AP4 transfers the response to the communication apparatus STA1 in Step S152. The communication apparatus STA1 receives, in Step S106, the association response transferred by the access point AP4. In the case of this example, the communication apparatus STA1 recognizes that access points AP selected as access points AP with which seamless connection is to be established are the access points AP1, AP2, AP4, and AP6, and is in a state in which a connection request for connection established with the access points AP1, AP2, AP4, and AP6 has been accepted.

When the entity 101 transmits, to the communication apparatus STA1, a response used to permit access to a plurality of access points AP, the entity 101 performs processing of reporting to each of the plurality of selected access points AP that the access point AP has been set to be a connection destination for seamless connection with the communication apparatus STA1. In this case, the report is made to each of the access points AP1, AP2, AP4, and AP6.

Processes of S178 to S181 that are performed by the entity 101 are similar to the processes of Steps S77 to S80 (Fig. 6). Thus, descriptions thereof are omitted. Further, processes of Steps S121, S131, S153, and S161 that are respectively performed by the access points AP1, AP2, AP4, and AP6 are similar to the respective processes of Steps S21, S31, S53, and S61 (Fig. 6). Thus, descriptions thereof are omitted.

As described above, the entity 101 reports to a plurality of access points AP (an AP group) that a seamless connection is to be set, and each of the plurality of access points AP to which the report has been made recognizes that the seamless connection has been set.

### <Processing Related to Generation of First Security Information>

When access points AP of a plurality of access points AP with which seamless roaming is performed by the communication apparatus STA are selected by performing the first selection processing or the second selection processing, processing of generating and sharing security information starts being performed by the communication apparatus STA and the plurality of selected access points AP. Here, an example in which security information is generated using a method called 4-way handshake is described.

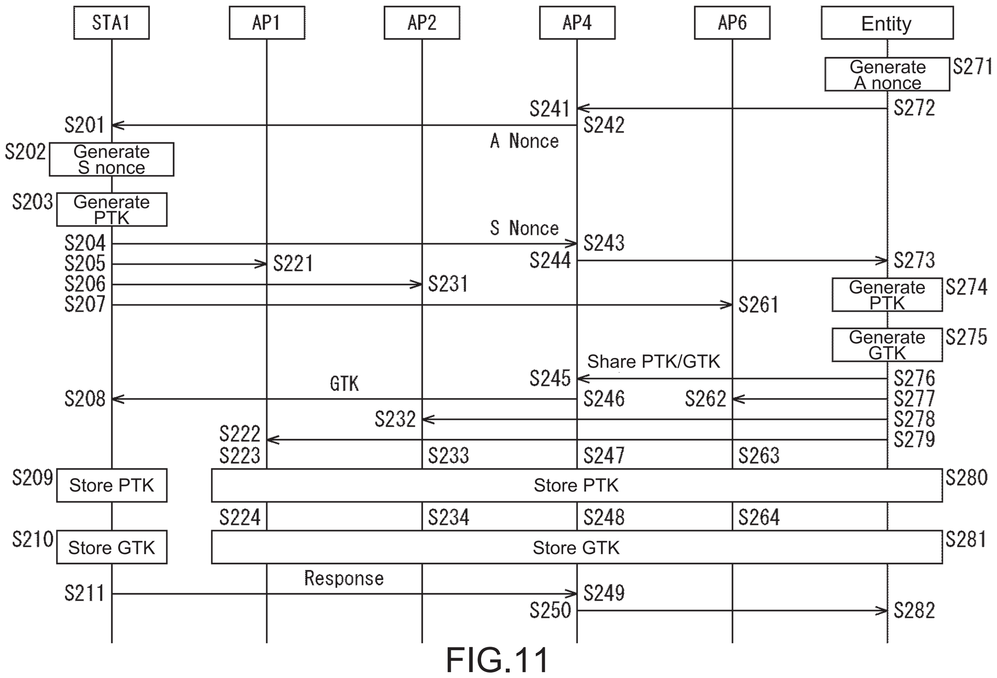

Fig. 11 is a diagram used to describe processing related to generation of first security information.

The entity 101 generates an authenticator nonce (an A nonce) using a random value in Step S271, and transmits the generated A nonce to the communication apparatus STA1 through the access point AP4 in Step S272. When the access point AP4 receives the A nonce from the entity 101 in Step S241, the access point AP4 transfers the received A nonce to the communication apparatus STA1 in Step S242.

When the communication apparatus STA1 receives the A nonce from the entity 101 in Step S201, the communication apparatus STA1 generates a supplicant nonce (an S nonce) using a random value in Step S202. Further, the communication apparatus STA1 generates a pairwise transient key (PTK) in Step S203. The PTK is used as a key to encrypt unicast communication.

The PTK is generated from a pairwise master key (PMK), an A nonce, an S nonce, and MAC addresses of the access point AP and the communication apparatus STA. The MAC address of the access point AP may be a MAC address assigned to the entity 101 (a MAC address of the controller 11, router 21, or access point AP including the entity 101), or may be a MAC address of the access point AP, which is performing communication at that point, that is, the access point AP4 in the example illustrated in Fig. 11.

The communication apparatus STA1 transmits the generated S nonce to the entity 101 through the access point AP4 in Step S204. The communication apparatus STA1 transmits the generated S nonce to the access point AP1 in Step S205, transmits the generated S nonce to the access point AP2 in Step S206, and transmits the generated S nonce to the access point AP6 in Step S207.

The access point AP1 receives the S nonce in Step S221, the access point AP2 receives the S nonce in Step S231, and the access point AP6 receives the S nonce in Step S261. An S nonce is transmitted from the communication apparatus STA1 to each of the access points AP1, AP2, AP4, and AP6, as described above, when the entity 101 is included in each of the access points AP, as in the wireless LAN system illustrated in Fig. 3, and when a PTK is generated by each of the access points AP. When the entity 101 is provided to a device other than the access point AP, as in the wireless LAN system illustrated in Fig. 1 or 2, the process of transmitting an S nonce to each access point AP may be omitted.

When the access point AP4 receives the S nonce from the communication apparatus STA1 in Step S243, the access point AP4 transfers the received S nonce to the entity 101 in Step S244.

When the entity 101 receives, in Step S273, the S nonce transmitted by the communication apparatus STA1 through the access point AP4, the entity 101 generates a PTK in Step S274. The PTK is generated by performing a process similar to the process performed by the communication apparatus STA1 in Step S203. The communication apparatus STA1 and the entity 101 each generate a PTK from the same element. Thus, the PTKs respectively generated by the communication apparatus STA1 and the entity 101 are identical PTKs, and the identical PTKs are held.

In the wireless LAN system to which the present technology is applied, the communication apparatus STA and a plurality of access points AP share security information such that seamless roaming can be performed. Thus, one PTK is shared to be used by the communication apparatus STA and the plurality of access points AP. A process for the use of one PTK is performed in a later step.

The entity 101 generates a group temporal key (GTK) in Step S275 concurrently with the generation of the PTK. The GTK is a key used to encrypt multicasting/broadcast communication. The GTK is generated by the entity 101 at random.

In the wireless LAN system to which the present technology is applied, a process performed for one GTK to be shared to be used by the communication apparatus STA and the access point AP subordinate to the entity 101 and selected to be an access point AP with which seamless roaming is to be performed, is performed in a later step.

In Step S276, the entity 101 transmits the generated PTK and GTK to the access point AP4, and transmits the GTK to the communication apparatus STA1. When the access point AP4 receives the PTK and GTK from the entity 101 in Step S245, the access point AP4 transfers the received GTK to the communication apparatus STA1 in Step S246.

When the communication apparatus STA1 receives the GTK from the entity 101 in Step S208, the process moves on to Step S209. The communication apparatus STA1 stores therein, in Step S209, the PTK generated by the process of Step S203, and stores therein, in Step S210, the GTK received by the process of Step S208. When the storing of the PTK and the GTK is completed, as described above, the communication apparatus STA1 reports to the entity 101, in Step S211, that 4-way handshake is completed.

This report is made to the entity 101 through the access point AP4. When the access point AP4 receives, in Step S249, the report being made by the communication apparatus STA1 and indicating that 4-way handshake is completed, the access point AP4 transfers the received report to the entity 101 in Step S250. The entity 101 receives, in Step S282, the report being made by the communication apparatus STA1 and indicating that 4-way handshake is completed, and recognizes that the communication apparatus STA1 is in a state of being capable of performing communication.

The entity 101 also performs a process for a PTK and a GTK to be stored in the access point AP with which seamless roaming is to be performed.

The entity 101 transmits the PTK and the GTK to the access point AP4 in Step S276. With respect to this transmission, the communication apparatus STA1 is also set to be a transmission destination, as described above. When the access point AP4 receives the PTK and the GTK from the entity 101 in Step S245, the access point AP4 stores therein the PTK in Step S247, and stores therein the GTK in Step S248.

The entity 101 transmits the PTK and the GTK to the access point AP6 in Step S277. When the access point AP6 receives the PTK and the GTK from the entity 101 in Step S262, the access point AP6 stores therein the PTK in Step S263, and stores therein the GTK in Step S264.

The entity 101 transmits the PTK and the GTK to the access point AP2 in Step S278. When the access point AP2 receives the PTK and the GTK from the entity 101 in Step S232, the access point AP2 stores therein the PTK in Step S233, and stores therein the GTK in Step S234.

The entity 101 transmits the PTK and the GTK to the access point AP1 in Step S279. When the access point AP1 receives the PTK and the GTK from the entity 101 in Step S222, the access point AP1 stores therein the PTK in Step S223, and stores therein the GTK in Step S224.

The entity 101 itself stores therein the PTK in Step S280, and stores therein the GTK in Step S281.

In the example illustrated in Fig. 11, shared PTK and GTK are stored in each of the communication apparatus STA1, the access point AP1, the access point AP2, the access point AP4, the access point AP6, and the entity 101, as described above. Security information is shared by the communication apparatus STA and a plurality of access points AP, as described above, and this makes it possible to perform switching of connection without performing the above-described processing of 4-way handshake when it becomes necessary to establish reconnection between the communication apparatus STA and the access point AP. In other words, seamless roaming can be performed.

### <Processing Related to Generation of Second Security Information>

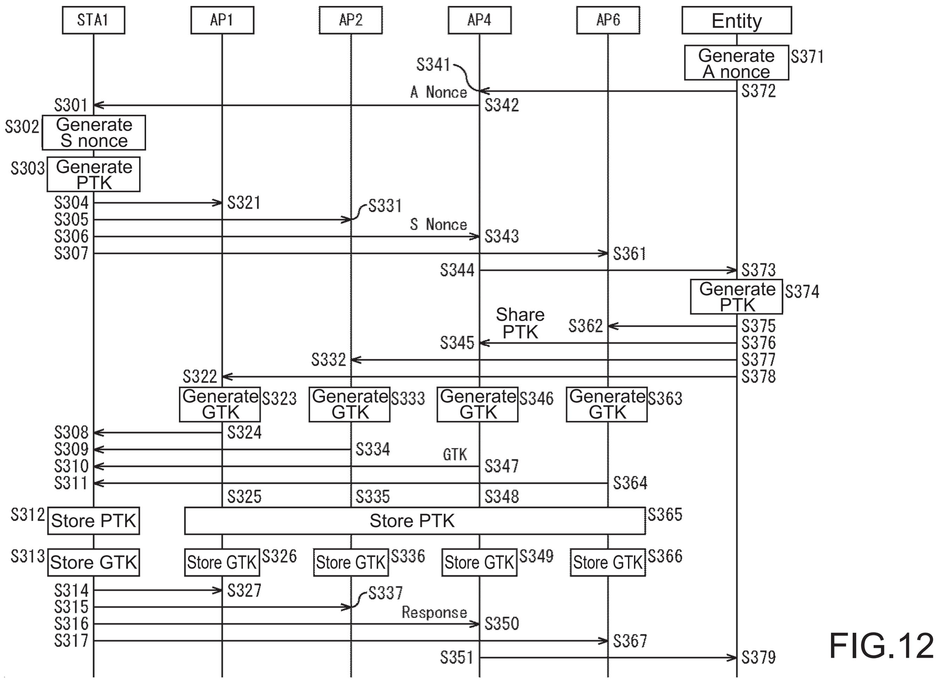

Fig. 12 is a diagram used to describe processing related to generation of second security information. The processing related to generation of second security information that is described with reference to Fig. 12 is different from the processing related to generation of first security information that is described with reference to Fig. 11 in that each access point AP generates a GTK and the respectively generated GTKs are stored. Regarding the other processes, the processing related to generation of second security information is essentially similar to the processing related to generation of first security information.

Processes performed by the communication apparatus STA1 in Steps S301 to S307 are similar to the processes of Steps S201 to S207 (Fig. 11), processes performed by the access point AP4 in Steps S341 to S344 are similar to the processes of Steps S241 to S244 (Fig. 11), and processes performed by the entity 101 in Steps S371 to S374 are similar to the processes of Steps S271 to S274 (Fig. 11). Thus, descriptions thereof are omitted. Further, the process of each of the access points AP1, AP2, AP4, and AP6 receiving an S nonce from the communication apparatus STA1 is also performed, as in the case of the process described with reference to Fig. 11. Thus, a description thereof is omitted.

When the entity 101 generates a PTK in Step S374, the entity 101 transmits the PTK to the access point AP6 in Step S375. When the access point AP6 receives the PTK from the entity 101 in Step S362, the access point AP6 stores therein the PTK in Step S365.

The entity 101 transmits the PTK to the access point AP4 in Step S376. When the access point AP4 receives the PTK from the entity 101 in Step S345, the access point AP4 stores therein the PTK in Step S348.

The entity 101 transmits the PTK to the access point AP2 in Step S377. When the access point AP2 receives the PTK from the entity 101 in Step S332, the access point AP2 stores therein the PTK in Step S335.

The entity 101 transmits the PTK to the access point AP1 in Step S378. When the access point AP1 receives the PTK from the entity 101 in Step S322, the access point AP1 stores therein the PTK in Step S325.

In Step S312, the communication apparatus STA1 also stores therein the PTK generated by the communication apparatus STA1 in Step S303. As described above, the communication apparatus STA1 generates a PTK by itself, and stores therein the generated PTK, as well as each of the access points AP1, AP2, AP4, and AP6 stores therein the PKT generated by the entity 101.

A GTK is generated by each access point AP and stored in the access point AP. The access point AP1 generates a GTK in Step S323, and transmits the generated GTK to the communication apparatus STA1 in Step S324. Further, the access point AP1 stores therein the generated GTK in Step S326.

The access point AP2 generates a GTK in Step S333, and transmits the generated GTK to the communication apparatus STA1 in Step S334. Further, the access point AP2 stores therein the generated GTK in Step S336.

The access point AP4 generates a GTK in Step S346, and transmits the generated GTK to the communication apparatus STA1 in Step S347. Further, the access point AP4 stores therein the generated GTK in Step S349.

The access point AP6 generates a GTK in Step S363, and transmits the generated GTK to the communication apparatus STA1 in Step S364. Further, the access point AP6 stores therein the generated GTK in Step S366.

The communication apparatus STA1 receives, in Step S308, the GTK generated to be transmitted by the access point AP1, and stores therein the GTK in Step S313. The communication apparatus STA1 receives, in Step S309, the GTK generated to be transmitted by the access point AP2, and stores therein the GTK in Step S313.

The communication apparatus STA1 receives, in Step S310, the GTK generated to be transmitted by the access point AP4, and stores therein the GTK in Step S313. The communication apparatus STA1 receives, in Step S311, the GTK generated to be transmitted by the access point AP6, and stores therein the GTK in Step S313.

As described above, the communication apparatus STA1 receives the GTKs respectively transmitted by the access points AP1, AP2, AP4, and AP6, and stores therein the GTKs. In this case, the communication apparatus STA1 stores different GTKs for the respective access points AP1, AP2, AP4, and AP6.

When the communication apparatus STA1 stores therein the PTK and the GTKs, the communication apparatus STA1 reports to the access point AP1, in Step S314, that 4-way handshake is completed. The access point AP1 receives, in Step S327, the report being made by the communication apparatus STA1 and indicating that 4-way handshake is completed, which results in the access point AP1 recognizing that the communication apparatus STA1 is in a state of being capable of performing communication.

The communication apparatus STA1 reports to the access point AP2, in Step S315, that 4-way handshake is completed. The access point AP2 receives, in Step S337, the report being made by the communication apparatus STA1 and indicating that 4-way handshake is completed, which results in the access point AP2 recognizing that the communication apparatus STA1 is in a state of being capable of performing communication.

The communication apparatus STA1 reports to the access point AP4, in Step S316, that 4-way handshake is completed. The access point AP4 receives, in Step S350, the report being made by the communication apparatus STA1 and indicating that 4-way handshake is completed, which results in the access point AP4 recognizing that the communication apparatus STA1 is in a state of being capable of performing communication.

The communication apparatus STA1 reports to the access point AP6, in Step S317, that 4-way handshake is completed. The access point AP6 receives, in Step S367, the report being made by the communication apparatus STA1 and indicating that 4-way handshake is completed, which results in the access point AP6 recognizing that the communication apparatus STA1 is in a state of being capable of performing communication.

When the access point AP4 receives, in Step S350, the report being made by the communication apparatus STA1 and indicating that 4-way handshake is completed, the access point AP4 transfers the report to the entity 101 in Step S351. The entity 101 receives, in Step S379, the report being transmitted by the communication apparatus STA1 to be transferred by the access point AP4 and indicating that 4-way handshake is completed, which results in the entity 101 recognizing that the communication apparatus STA1 is in a state of being capable of performing communication.

In the example illustrated in Fig. 12, a shared PTK is stored in each of the communication apparatus STA1, the access point AP1, the access point AP2, the access point AP4, the access point AP6, and the entity 101, and GTKs respectively generated by the access points AP are stored. Security information is shared by the communication apparatus STA and a plurality of access points AP, as described above, and this makes it possible to perform switching of connection without performing the above-described processing of 4-way handshake when it becomes necessary to establish reconnection between the communication apparatus STA and the access point AP. In other words, seamless roaming can be performed.

### <Processing Related to Generation of Third Security Information>

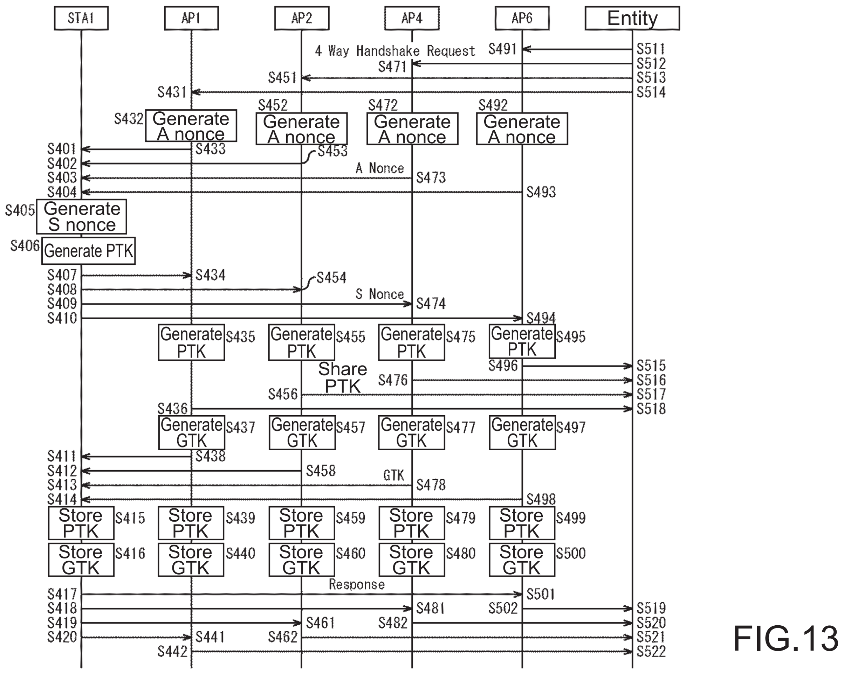

Fig. 13 is a diagram used to describe processing related to generation of third security information. The processing related to generation of third security information that is described with reference to Fig. 13 is different from the processing related to generation of first security information that is described with reference to Fig. 11 in that each access point AP generates a PTK and a GTK and the respectively generated PTKs and the respectively generated GTKs are stored. Regarding the other processes, the processing related to generation of third security information is essentially similar to the processing related to generation of first security information.

The entity 101 transmits a 4-way-handshake request to the access point AP6 in Step S511, transmits a 4-way-handshake request to the access point AP4 in Step S512, transmits a 4-way-handshake request to the access point AP2 in Step S513, and transmits a 4-way-handshake request to the access point AP1 in Step S514.

When the access point AP6 receives the 4-way-handshake request from the entity 101 in Step S491, the access point AP6 generates an authenticator nonce (an A nonce) using a random value in Step S492. The access point AP6 transmits the generated A nonce to the communication apparatus STA1 in Step S493.

When the access point AP4 receives the 4-way-handshake request from the entity 101 in Step S471, the access point AP4 generates an A nonce in Step S472. The access point AP4 transmits the generated A nonce to the communication apparatus STA1 in Step S473.

When the access point AP2 receives the 4-way-handshake request from the entity 101 in Step S451, the access point AP2 generates an A nonce in Step S452. The access point AP2 transmits the generated A nonce to the communication apparatus STA1 in Step S453.

When the access point AP1 receives the 4-way-handshake request from the entity 101 in Step S431, the access point AP1 generates an A nonce in Step S432. The access point AP1 transmits the generated A nonce to the communication apparatus STA1 in Step S433.

When the communication apparatus STA1 receives the A nonce from the access point AP1 in Step S401, the communication apparatus STA1 generates a supplicant nonce (an S nonce) using a random value in Step S405. Further, the communication apparatus STA1 generates a pairwise transient key (PTK) in Step S406. The PTK is generated from a pairwise master key (PMK), an A nonce, an S nonce, and MAC addresses of the access point AP and the communication apparatus STA. In this case, a MAC address of the access point AP1 is used, and the PKT is used for communication performed between the communication apparatus STA1 and the access point AP1. The PTK generated by the communication apparatus STA1 is stored in Step S415.

When the communication apparatus STA1 receives the A nonce from the access point AP2 in Step S402, the communication apparatus STA1 generates an S nonce in Step S405. Further, the communication apparatus STA1 generates a PTK using a MAC address of the access point AP2 in Step S406. In Step S415, the generated PKT is stored in the communication apparatus STA1 as a key used for communication performed between the communication apparatus STA1 and the access point AP2.

When the communication apparatus STA1 receives the A nonce from the access point AP4 in Step S403, the communication apparatus STA1 generates an S nonce in Step S405. Further, the communication apparatus STA1 generates a PTK using a MAC address of the access point AP4 in Step S406. In Step S415, the generated PKT is stored in the communication apparatus STA1 as a key used for communication performed between the communication apparatus STA1 and the access point AP4.

When the communication apparatus STA1 receives the A nonce from the access point AP6 in Step S404, the communication apparatus STA1 generates an S nonce in Step S405. Further, the communication apparatus STA1 generates a PTK using a MAC address of the access point AP6 in Step S406. In Step S415, the generated PKT is stored in the communication apparatus STA1 as a key used for communication performed between the communication apparatus STA1 and the access point AP6.

In Step S405, the S nonce may be generated every time the A nonce is received from the access point AP, or may be shared to be used.

The S nonce generated by the communication apparatus STA1 is transmitted to the access point AP1 in Step S407, the S nonce generated by the communication apparatus STA1 is transmitted to the access point AP2 in Step S408, the S nonce generated by the communication apparatus STA1 is transmitted to the access point AP4 in Step S409, and the S nonce generated by the communication apparatus STA1 is transmitted to the access point AP6 in Step S410.

When the access point AP1 receives the S nonce from the communication apparatus STA1 in Step S434, the access point AP1 generates a PTK in Step S435. The access point AP1 transmits the generated PTK to the entity 101 in Step S436, and stores therein the generated PTK in Step S439.

When the access point AP2 receives the S nonce from the communication apparatus STA1 in Step S454, the access point AP2 generates a PTK in Step S455. The access point AP2 transmits the generated PTK to the entity 101 in Step S456, and stores therein the generated PTK in Step S459.

When the access point AP4 receives the S nonce from the communication apparatus STA1 in Step S474, the access point AP4 generates a PTK in Step S475. The access point AP4 transmits the generated PTK to the entity 101 in Step S476, and stores therein the generated PTK in Step S479.

When the access point AP6 receives the S nonce from the communication apparatus STA1 in Step S494, the access point AP6 generates a PTK in Step S495. The access point AP6 transmits the generated PTK to the entity 101 in Step S496, and stores therein the generated PTK in Step S499.

As described above, each of the access points AP1, AP2, AP4, and AP6 receives an S nonce generated by the communication apparatus STA1, generates a PTK using, for example, the S nonce and its own MAC address, and stores therein the generated PTK. The communication apparatus STA1 and the access point AP1 are in a state of sharing their own PTK, the communication apparatus STA1 and the access point AP2 are in a state of sharing their own PTK, the communication apparatus STA1 and the access point AP4 are in a state of sharing their own PTK, and the communication apparatus STA1 and the access point AP6 are in a state of sharing their own PTK.

The entity 101 also receives the respective PTKs from the access points AP1, AP2, AP4, and AP6 by the respective processes of Steps S515 to S518. Thus, the entity 101 is also in a state of sharing the PTKs.

Each of the access points AP1, AP2, AP4, and AP6 also generates a group temporal key (GTK). The access point AP1 generates a GTK in Step S437, and transmits the generated GTK to the communication apparatus STA1 in Step S438. The access point AP1 stores therein the generated GTK in Step S440.

The access point AP2 generates a GTK in Step S457, and transmits the generated GTK to the communication apparatus STA1 in Step S458. The access point AP2 stores therein the generated GTK in Step S460.

The access point AP4 generates a GTK in Step S477, and transmits the generated GTK to the communication apparatus STA1 in Step S478. The access point AP4 stores therein the generated GTK in Step S480.

The access point AP6 generates a GTK in Step S497, and transmits the generated GTK to the communication apparatus STA1 in Step S498. The access point AP6 stores therein the generated GTK in Step S500.

The communication apparatus STA1 receives the GTK from the access point AP1 in Step S411, receives the GTK from the access point AP2 in Step S412, receives the GTK from the access point AP4 in Step S413, and receives the GTK from the access point AP6 in Step S414. The communication apparatus STA1 stores therein the received GTKs in Step S416.

As described above, each of the access points AP1, AP2, AP4, and AP6 generates a GTK and stores therein the generated GTK. The communication apparatus STA1 and the access point AP1 are in a state of sharing their own GTK, the communication apparatus STA1 and the access point AP2 are in a state of sharing their own GTK, the communication apparatus STA1 and the access point AP4 are in a state of sharing their own GTK, and the communication apparatus STA1 and the access point AP are in a state of sharing their own GTK.

When storing of the PTKs and the GTKs is completed, as described above, the communication apparatus STA1 reports to the access point AP6, in Step S417, that 4-way handshake is completed. The access point AP6 receives the report from the communication apparatus STA1 in Step S501. The access point AP6 receives the report from the communication apparatus STA1, which results in the access point AP6 recognizing that the access point AP6 is in a state of being capable of communicating with the communication apparatus STA1.

In Step S502, the access point AP6 transmits, to the entity 101, the report being made by the communication apparatus STA1 and indicating that 4-way handshake is completed. At this point, the access point AP6 also transmits, to the entity 101, the GTK generated by the access point AP6. The entity 101 receives, in Step S519, the report being transmitted by the communication apparatus STA1 through the access point AP6 and indicating that 4-way handshake is completed, which results in the entity 101 recognizing that the communication apparatus STA1 and the access point AP6 are in a state of being capable of communicating with each other. Further, the entity 101 stores therein the GTK of the access point AP6.

The communication apparatus STA1 reports to the access point AP4, in Step S418, that 4-way handshake is completed. The access point AP4 receives the report from the communication apparatus STA1 in Step S481. The access point AP4 receives the report from the communication apparatus STA1, which results in the access point AP4 recognizing that the access point AP4 is in a state of being capable of communicating with the communication apparatus STA1.

In Step 482, the access point AP4 transmits, to the entity 101, the report being made by the communication apparatus STA1 and indicating that 4-way handshake is completed. At this point, the access point AP4 also transmits, to the entity 101, the GTK generated by the access point AP4. The entity 101 receives, in Step S520, the report being transmitted by the communication apparatus STA1 through the access point AP4 and indicating that 4-way handshake is completed, which results in the entity 101 recognizing that the communication apparatus STA1 and the access point AP4 are in a state of being capable of communicating with each other. Further, the entity 101 stores therein the GTK of the access point AP4.

The communication apparatus STA1 reports to the access point AP2, in Step S419, that 4-way handshake is completed. The access point AP2 receives the report from the communication apparatus STA1 in Step S461. The access point AP2 receives the report from the communication apparatus STA1, which results in the access point AP2 recognizing that the access point AP2 is in a state of being capable of communicating with the communication apparatus STA1.

In Step 462, the access point AP2 transmits, to the entity 101, the report being made by the communication apparatus STA1 and indicating that 4-way handshake is completed. At this point, the access point AP2 also transmits, to the entity 101, the GTK generated by the access point AP2. The entity 101 receives, in Step S521, the report being transmitted by the communication apparatus STA1 through the access point AP2 and indicating that 4-way handshake is completed, which results in the entity 101 recognizing that the communication apparatus STA1 and the access point AP2 are in a state of being capable of communicating with each other. Further, the entity 101 stores therein the GTK of the access point AP2.

The communication apparatus STA1 reports to the access point AP1, in Step S420, that 4-way handshake is completed. The access point AP1 receives the report from the communication apparatus STA1 in Step S441. The access point AP1 receives the report from the communication apparatus STA1, which results in the access point AP1 recognizing that the access point AP1 is in a state of being capable of communicating with the communication apparatus STA1.

In Step 442, the access point AP1 transmits, to the entity 101, the report being made by the communication apparatus STA1 and indicating that 4-way handshake is completed. At this point, the access point AP1 also transmits, to the entity 101, the GTK generated by the access point AP1. The entity 101 receives, in Step S522, the report being transmitted by the communication apparatus STA1 through the access point AP1 and indicating that 4-way handshake is completed, which results in the entity 101 recognizing that the communication apparatus STA1 and the access point AP1 are in a state of being capable of communicating with each other. Further, the entity 101 stores therein the GTK of the access point AP1.

In the example illustrated in Fig. 13, shared PTK and GTK are stored in the communication apparatus STA1; each of the access points AP1, AP2, AP4, and AP6; and the entity 101, as described above. Security information is shared by the communication apparatus STA and a plurality of access points AP, as described above, and this makes it possible to perform switching of connection without performing the above-described processing of 4-way handshake when it becomes necessary to establish reconnection between the communication apparatus STA and the access point AP. In other words, seamless roaming can be performed.

### <Regarding Processing Performed Upon Performing Switching on AP Group>

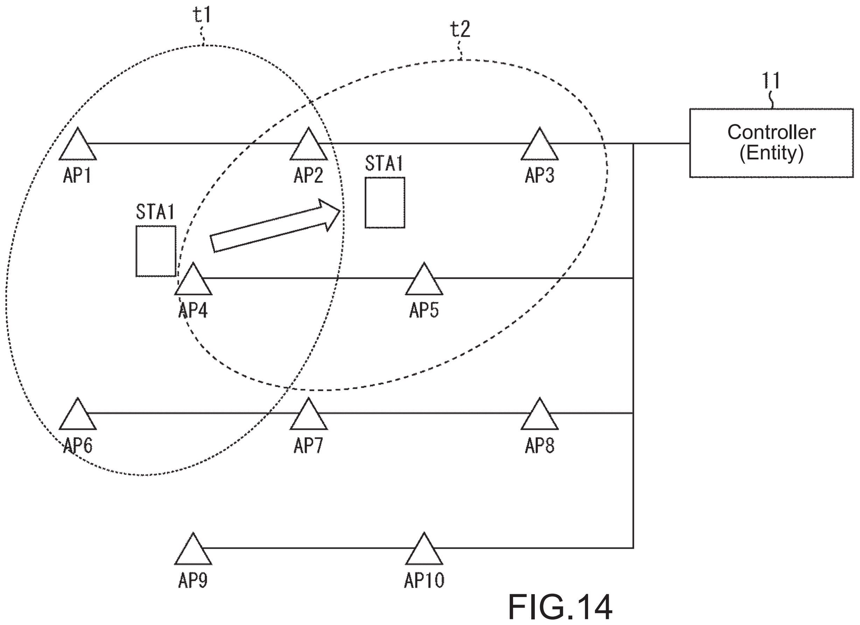

When the communication apparatus STA and the access point AP (the entity 101) share security information, as described above, this makes it possible to seamlessly perform switching of a connection-target access point AP even if the communication apparatus STA has moved in an AP group (in a connection-available range). For example, processing performed when there is a change in AP group that is caused due to movement of the communication apparatus STA, is described with reference to Fig. 14.

At a time t1, the communication apparatus STA1 is situated in a connection-available range t1. As an AP group, the access points AP1, AP2, AP4, and AP6 are situated in the connection-available range t1. The access points AP1, AP2, AP4, and AP6 are set to be access points AP with which seamless roaming is to be performed, and share security information.

It is assumed that, at a time t2, the connection-available range is changed from the connection-available range t1 to a connection-available range t2 due to movement of the communication apparatus STA1. As an AP group, the access points AP2, AP3, AP4, and AP5 are situated in the connection-available range t2.

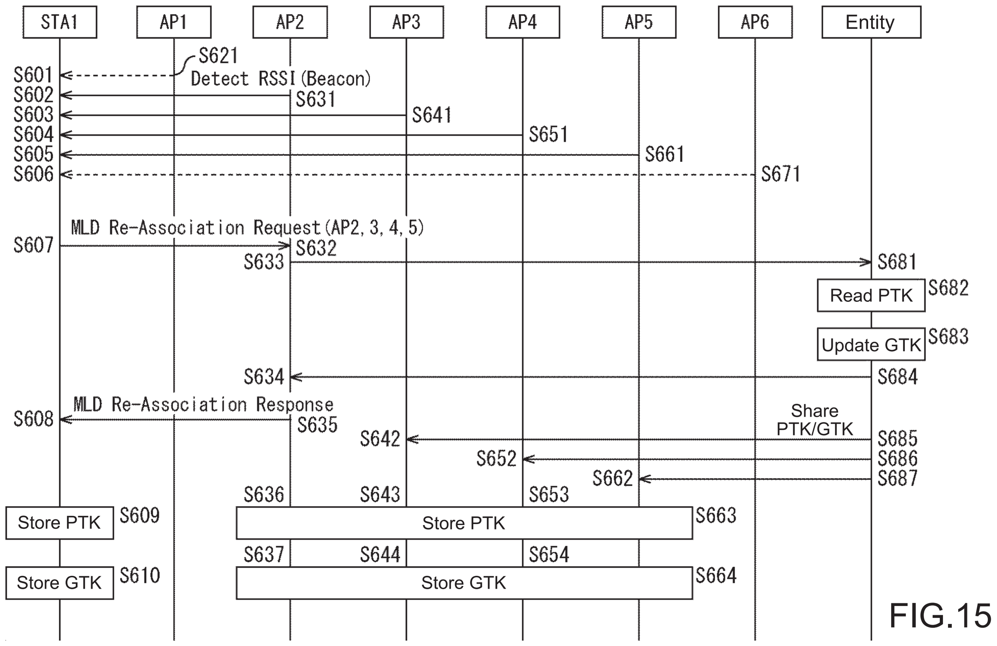

In such a case, there is a change in a state of access points AP situated in a connection-available range, that is, the access points AP1 and AP6 are situated outside of the range, and the access points AP3 and AP5 are situated within the range. Detection of such a change in state and an operation performed upon the detection are described with reference to a flowchart in Fig. 15.

For example, the communication apparatus STA1 is capable of acquiring information regarding, for example, an electrolysis strength of reception of a beacon signal transmitted by each access point AP, and of grasping access points AP situated around the communication apparatus STA1.

The access point AP1 emits a beacon signal in Step S621, and the communication apparatus STA1 receives the beacon signal in Step S601. The communication apparatus STA1 detects that reception strength of reception from the access point AP1 is weak. In Fig. 15, the weakness of the reception strength is indicated using a dotted line. For example, whether reception strength is weak can be determined using a received signal strength indicator (RSSI) that is a value obtained by measuring to what degree of strength the communication apparatus STA1 can receive a signal from the access point AP.

The access point AP2 emits a beacon signal in Step S631, and the communication apparatus STA1 receives the beacon signal in Step S602. The communication apparatus STA1 detects that reception strength of reception from the access point AP2 is sufficient. The access point AP3 emits a beacon signal in Step S641, and the communication apparatus STA1 receives the beacon signal in Step S603. The communication apparatus STA1 detects that reception strength of reception from the access point AP3 is sufficient.

The access point AP4 emits a beacon signal in Step S651, and the communication apparatus STA1 receives the beacon signal in Step S604. The communication apparatus STA1 detects that reception strength of reception from the access point AP4 is sufficient. The access point AP5 emits a beacon signal in Step S661, and the communication apparatus STA1 receives the beacon signal in Step S605. The communication apparatus STA1 detects that reception strength of reception from the access point AP5 is sufficient.

The access point AP6 emits a beacon signal in Step S671, and the communication apparatus STA1 receives the beacon signal in Step S606. The communication apparatus STA1 detects that reception strength of reception from the access point AP6 is not sufficient.

At the time t1, the communication apparatus STA1 is connected to the access points AP1, AP2, AP4, and AP6. The processes of Steps S601 to S606 result in detecting that connection with the access point AP1 and connection with the access point AP6 have been respectively made weaker. In this case, the state is changed from a certain state to another state, the certain state being a state in which connection with four access points AP is established, the other state being a state in which connection with two of the four access points AP has become unstable.

For example, processing of resetting an AP group is started when connection established with half the number of access points AP set to be access points AP in an AP group with which seamless roaming is to be performed has become unstable, as described above. Here, an example in which the processing of resetting an AP group is started under the condition that connection with half the number of access points AP has become unstable, has been described. However, for example, the processing of resetting an AP group may be started when connection established with about 2/3 of the number of access points AP has become unstable or when the number of access points AP with which stable connection can be maintained is reduced up to one.

In Step S607, the communication apparatus STA1 transmits a re-association request to the entity 101 through the access point AP2. Note that an example in which the access point AP2 has been selected is described here. However, the re-association request may be transmitted to an access point AP other than the access point SP2. Further, the re-association request may be transmitted to the access point AP5, which becomes a new access point AP.

Referring to Fig. 14 again, it is assumed that the access point AP, which communicates with the communication apparatus STA1, is switched from the access point AP4 to the access point AP2 when the communication apparatus STA1 moves from a position of the communication apparatus STA1 at the time t1 to a position of the communication apparatus STA1 at the time t2. Seamless roaming is performed upon performing switching (roaming) of a connection destination. Thus, switching is performed without communication being interrupted.

The communication apparatus STA1 shares security information with an AP group. Thus, when roaming is performed, the communication apparatus STA1 reads, from among pieces of shared security information, a piece of security information regarding a roaming destination, and switching of a primary access point AP corresponding to a connection destination is performed.

In this case, security information regarding the access point AP2 is read in a state in which, for example, communication with the access point AP4 with which connection is established most stably is being performed using security information regarding the access point AP4, and the primary connection destination is switched to the access point AP2 using the read information regarding the access point AP2.

The switching processing can be performed without performing processing of, for example, acquiring security information. Thus, seamless roaming can be performed at this point.

When communication with the access point AP2 is performed after the primary connection destination is switched to the access point AP2 and when the re-association request in Step S607 is transmitted, the re-association request is transmitted to the access point AP2. This re-association request is a re-association request indicating that the access points AP2, AP3, AP4, and AP5 are specified as access points AP in an AP group.

The access point AP2 receives the re-association request from the communication apparatus STA1 in Step S632, and transfers the request to the entity 101 in Step S633.

In Step S681, the entity 101 receives the re-association request transmitted by the communication apparatus STA1 through the access point AP2. The entity 101 reads a PTK as necessary in Step S682, and updates a GTK in Step S683. Processing to share the read PTK and the updated GTK with an access point AP reset to be an access point AP with which seamless roaming is to be performed, is started.

In Step S684, the entity 101 transmits a re-association response to the communication apparatus STA1 through the access point AP2. This re-association response includes the read PTK and the updated GTK. When the access point AP2 receives the re-association response from the entity 101 in Step S634, the access point AP2 transfers the received re-association response to the communication apparatus STA1 in Step S635.

The access point AP2 stores therein, in Step S636, the PTK included in the re-association response, and stores therein, in Step S637, the GTK included in the re-association response.

When the communication apparatus STA1 receives the re-association response in Step S608, the communication apparatus STA1 stores therein the PTK in Step S609, and stores therein the GTK in Step S610.

The entity 101 transmits the PTK and the GTK to the access point AP3 in Step S685. The access point AP3 receives the PTK and the GTK from the entity 101 in Step S642, stores therein the received PTK in Step S643, and stores therein the received GTK in Step S644.

The entity 101 transmits the PTK and the GTK to the access point AP4 in Step S686. The access point AP4 receives the PTK and the GTK from the entity 101 in Step S652, stores therein the received PTK in Step S653, and stores therein the received GTK in Step S654.

The entity 101 transmits the PTK and the GTK to the access point AP5 in Step S687. The access point AP5 receives the PTK and the GTK from the entity 101 in Step S662, stores therein the received PTK in Step S663, and stores therein the received GTK in Step S664.

As a result of performing such processing, the access points AP2, AP3, AP4, and AP5 reset to be access points AP in an AP group with which seamless roaming is to be performed, the communication apparatus STA1, and the entity 101 share security information such as a PTK and a GTK.

Processing related to sharing of security information such as a PTK and a GTK is performed by applying one of the processing related to generation of first security information to the processing related to generation of third security information that have been respectively described with reference to Figs. 11 to 13. The example in which the processing related to generation of first security information that has been described with reference to Fig. 11 has been described with reference to Fig. 15.

A new AP group with which seamless roaming is to be performed is set when there is a change in an AP group with which seamless roaming is to be performed, as described above, and this makes it possible to perform processing in conformity to a change in AP group that is caused due to movement of the communication apparatus STA. Seamless roaming can be continuously performed even when the communication apparatus STA moves greatly.

### <Operation Performed by Communication Apparatus STA>

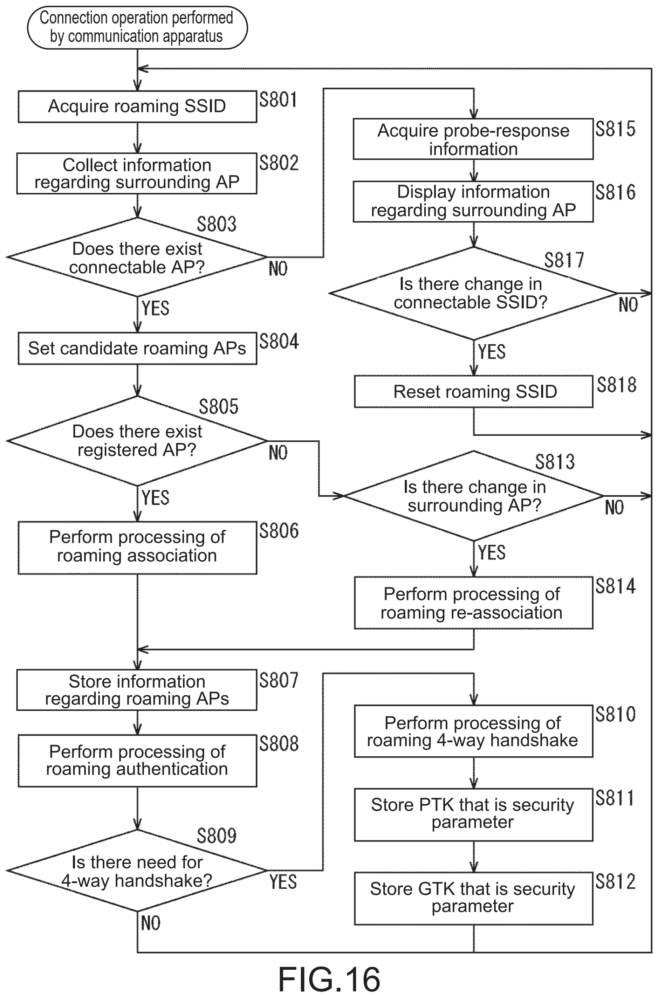

An operation performed by the communication apparatus STA performing the processing described above is described with reference to a flowchart in Fig. 16.

In Step S801, information regarding an SSID of an access point AP with which roaming can be performed is acquired. In Step S802, information regarding an access point AP situated around the communication apparatus STA is collected. For example, the information is collected by receiving a beacon signal emitted by an access point AP.

When it is determined, in Step S803, whether there is a connectable access point AP and when it has been determined that there is a connectable access point AP, the process moves on to Step S804. In Step S804, the connectable access point AP is stored as a candidate for an access point AP with which seamless roaming can be performed.

Note that, here, a plurality of candidates for the access point AP with which seamless roaming can be performed may be selected. In this case, pieces of information regarding all of the connectable access points AP situated around the communication apparatus STA may be acquired.

It is determined, in Step S805, whether there is a registered access point AP. For example, when the processing described above is performed, access points AP of a plurality of access points AP have been registered as access points AP with which roaming can be performed, and the communication apparatus STA is communicating with one of the access points AP, it is determined to be NO in Step S805, and the process moves on to Step S813.

For example, when there is a registered access point AP but an access point AP that is a candidate for an access point AP with which seamless roaming can be performed is not registered in Step S804, it is determined to be YES in Step S805, and the process moves on to Step S806. This will occur when, for example, the communication apparatus STA starts to be used at home or at a visit-destination company after being used at the office.

When it has been determined, in Step S805, that there is no registered access point AP and when the process moves on to Step S806, processing of roaming association is performed in Step S806. Information regarding a plurality of access points AP (an AP group) with which seamless roaming is to be performed is stored in Step S807, where the information is obtained by performing the processing of roaming association in Step S806.

In Step S808, processing of roaming authentication is performed. The processes of Steps S806 to S808 are performed by performing the first selection processing described with reference to Fig. 6 or the second selection processing described with reference to Fig. 10.

It is determined, in Step S809, whether there is a need to perform processing of 4-way handshake. When it has been determined, in Step S809, that there is a need to perform the processing of 4-way handshake, the process moves on to Step S810. The processing of 4-way handshake is performed in Step S810, a PTK that is security information obtained as a result of the processing of 4-way handshake is stored in Step S811, and a GTK that is security information obtained as a result of the processing of 4-way handshake is stored in Step S812.

The processes of Steps S809 to S812 are performed by applying one of the processing related to generation of first security information to the processing related to generation of third security information that have been respectively described with reference to Figs. 11 to 13.

When it has been determined, in Step S809, that there is no need to perform the processing of 4-way handshake or when the processes performed until a GTK is stored in Step S812 are terminated, the process returns to Step S801, and the processes of and after Step S801 are repeated.

On the other hand, when it has been determined, in Step S805, that there is a registered access point AP, the process moves on to Step S813. It is determined, in Step S813, whether there is a change in an access point AP situated around the communication apparatus STA. This process is a process corresponding to the processes of Steps S601 to S606 (Fig. 15). When it has been determined, in Step S813, that there is a change in the access point AP situated around the communication apparatus STA, the process moves on to Step S814.

In Step S814, processing of roaming re-association is performed, and the processes of and after Step S807 are performed. The re-association processing performed in and after Step S814 corresponds to the process of Step S607 (Fig. 15), and is performed as described with reference to Fig. 15.

On the other hand, when it has been determined, in Step S813, that there is no change in the access point AP situated around the communication apparatus STA, the process returns to Step S801, and the processes of and after Step S8101 are repeated.

On the other hand, it has been determined, in Step S803, that there is no connectable access point AP, the process moves on to Step S815. In Step S815, a probe request is transmitted as necessary, and information regarding a probe response to the request is acquired. In the process of Step S815, information regarding an access point AP situated around the communication apparatus STA is displayed to a user of the communication apparatus STA to present the information regarding the access point AP situated around the communication apparatus STA, and this enables the user to select an access point AP and to input an SSID.

It is determined, in Step S817, whether there is a change in connectable SSID. When, for example, a user inputs an SSID, it is determined that there is a change in connectable SSID, and the process moves on to Step S818. In Step S818, the SSID after the change is reset to be an SSID with which roaming can be performed. When the process of Step S818 is terminated or when it has been determined, in Step S817, that there is no change in connectable SSID, the process returns to Step S801, and the processes of and after Step S801 are performed.

Note that, when it has been determined, in Step S817, that there is no change in connectable SSID, a roaming operation does not necessarily have to be performed until the communication apparatus STA returns to a region near an access point AP that is situated around the communication apparatus STA and with which connection is allowed to be established.

### <Connection Operation Performed by Entity>

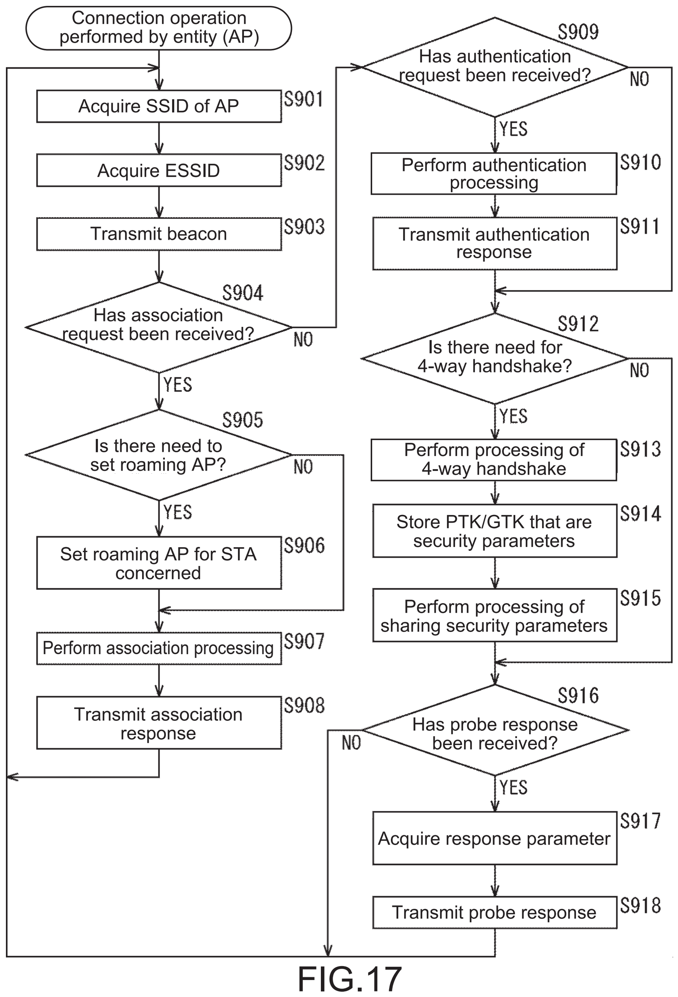

A connection operation performed by the entity 101 for access points AP is described with reference to a flowchart in Fig. 17. The entity 101 for access points AP as used herein may be the entity 101 operating as an access point AP itself (in the case of the configuration as illustrated in Fig. 3), or may be an entity for access points AP that is included in an apparatus being different from an access point AP and operating as a router (in the case of the configuration as illustrated in Fig. 1 or 2). In this case, the connection operation may be defined as an operation of a management-function portion of an access point AP.

A service set identifier (SSID) of an access point AP is acquired in Step S901, and an extended service set identifier (ESSID) is acquired in Step S902 as necessary. In Step S903, a beacon frame that includes parameters such as a service set identifier and an extended service set identifier is transmitted at a specified timing.

When it is determined, in Step S904, whether an association request has been received from a communication apparatus STA situated around the access point AP. When it has been determined that the request has been received, the process moves on to Step S905. It is determined, in Step S905, whether the access point AP is requested to serve as an access point AP with which roaming is to be performed. In other words, it is determined whether the access point AP is included in an AP group with which seamless roaming is to be performed.

When it has been determined, in Step S905, that the access point AP is requested to serve as an access point AP with which roaming is to be performed, an operation performed by an access point AP set to be an access point AP with which seamless roaming is to be performed is set in Step S906, and association processing is performed in Step S907.

Note that, when roaming is not requested to be performed, only normal association processing may be performed as is conventionally done.

An association response is transmitted in Step S908, and the process returns to Step S901. On the other hand, when it has been determined, in Step S905, that the access point AP is not requested to serve as an access point AP with which roaming is to be performed, the process of Step S906 is omitted, and the process moves on to Step S907.

The processes of Steps S904 to S908 correspond to, for example, the processes of Steps S76 to S80 (Fig. 6).

On the other hand, when it has been determined, in Step S904, that the association request has not been received, the process moves on to Step S909. It is determined, in Step S909, whether an authentication request has been received. When it has been determined, in Step S909, that the authentication request has been received, the process moves on to Step S910.

In Step S910, authentication processing is performed in response to the authentication request. An authentication response is transmitted in Step S911.

The processes of Steps S909 to S911 correspond to, for example, the processes of Steps S73 and S74 (Fig. 6).

When the process of Step S911 is terminated or when it has been determined, in Step S909, that the authentication request has not been received, the process moves on to Step S912. It is determined, in Step S912, whether there is a need to perform processing of 4-way handshake. When it has been determined, in Step S912, that there is a need to perform the processing of 4-way handshake, the process moves on to Step S913. The processing of 4-way handshake is performed in Step S913, and a PTK and a GTK that are security information obtained as a result of the processing of 4-way handshake are stored in Step S914.

Processing to share the PTK and GTK corresponding to security information with an access point AP set to be an access point AP with which seamless roaming is to be performed, is performed in Step S915.

The processes of Steps S912 to S915 are performed by applying one of the processing related to generation of first security information to the processing related to generation of third security information that have been respectively described with reference to Figs. 11 to 13.

When it has been determined, in Step S912, that there is no need to perform the processing of 4-way handshake or when the processing to share the PTK and the GTK is terminated in Step S915, the process moves on to Step S916.

It is determined, in Step S916, whether a probe request has been received from the communication apparatus STA situated around the access point AP. When it has been determined, in Step S916, that the probe request has been received, the process moves on to Step S917, a parameter used when operating as an access point AP is acquired according to the request, and the parameter is transmitted as a probe response in Step S918.

The processes of Steps S916 to S918 correspond to, for example, the processes of Steps S71 and S72 (Fig. 6).

On the other hand, when it has been determined, in Step S916, that the probe request has not been received or when the process of Step S918 is terminated, the process returns to Step S901, and the processes of and after Step S901 is repeated.

According to the present technology, a communication apparatus STA shares security-related information with access points AP situated around the communication apparatus STA, the sharing being performed at a timing at which the communication apparatus STA is associated with the access points AP. This enables seamless roaming to be performed with the access points AP.

The communication apparatus STA exchanges security-related information with an entity connected to a certain access point AP using any ESS ID, the certain access point AP being from among access points AP situated around the communication apparatus STA. This enables the communication apparatus STA to avoid being connected to the other access points AP excessively situated around the communication apparatus STA. When the range in which security-related information is shared is limited to a range for access points AP that are connected to each other through a cable using the same ESS, this makes it possible to share security-related information with an enhanced confidentiality.

When there is a change in the configuration of access points AP situated around the communication apparatus STA, re-association is performed as necessary. This makes it possible to specify, at all times, a range in which seamless roaming is performed with access points AP situated around the communication apparatus STA. Reconnection is established by re-association, and this results in a range in which security-related information is shared being limited to access points AP that are connected to each other through a cable using the same ESS. This makes it possible to share security-related information with an enhanced confidentiality.

Seamless roaming enables a communication apparatus to secure a highly reliable connection with a plurality of access points situated around the communication apparatus. Thus, the communication apparatus can perform communication via a certain access point AP while performing an operation of exchanging data via another access point. When, for example, connection established with an access point AP with which data communication is currently being performed becomes unstable, connection can be established via another access point AP to obtain a method for securing connection with more certainty if a communication apparatus includes a function to perform seamless roaming with a plurality of access points AP. This makes it possible to obtain a method for performing a highly reliable communication between the access point AP and the communication apparatus STA.

As used herein, the system refers to a whole apparatus that includes a plurality of apparatuses.

Note that the effects described herein are not limitative but are merely illustrative, and other effects may be provided.

Note that the embodiment of the present technology is not limited to the examples described above, and various modifications may be made thereto without departing from the scope of the present technology.

Note that the present technology may also take the following configurations.
(1) A communication apparatus, including:
   a communication section that communicates with an access point that creates a wireless local-area-network (LAN) system;
   a management section that manages pieces of security information regarding a plurality of the access points connectable by the communication apparatus; and
   a roaming processing section that switches, upon roaming, the access point corresponding to a connection destination, using the pieces of security information managed by the management section.
(2) The communication apparatus according to (1), in which
   the communication apparatus transmits, to an entity, a request that includes the plurality of the access points with which the pieces of security information are shared.
(3) The communication apparatus according to (2), in which
   the request is transmitted using an association request.
(4) The communication apparatus according to (2), in which
   the request is transmitted using an authentication request.
(5) The communication apparatus according to (2), in which
   the security information is supplied by the entity.
(6) The communication apparatus according to any one of (1) to (5), in which
   the management section manages pieces of information regarding at least two of the access points having the same service set identifier.
(7) The communication apparatus according to any one of (1) to (5), in which
   the management section manages pieces of information regarding at least two of the access points having an extended service set identifier.
(8) The communication apparatus according to any one of (1) to (7), in which
   the plurality of the access points is situated in a range in which the access points of the plurality of the access points are connected to each other through a cable.
(9) The communication apparatus according to any one of (1) to (8), in which
   the communication section communicates with one of the plurality of the access points for which the pieces of security information are managed by the management section.
(10) The communication apparatus according to any one of (1) to (9), in which
   when there is a change in a configuration of the access points situated around the communication apparatus, the management section manages the pieces of security information regarding a plurality of the access points having become newly connectable by the communication apparatus.
(11) A communication method that is performed by a communication apparatus including a communication section that communicates with an access point that creates a wireless LAN system, the communication method including:
   managing pieces of security information regarding a plurality of the access points connectable by the communication apparatus; and
   switching, upon roaming, the access point corresponding to a connection destination, using the pieces of managed security information.
(12) A communication apparatus, including:
   a communication section that communicates with a communication apparatus that creates a wireless local-area-network (LAN) system; and
   a management section that manages pieces of security information regarding access points in response to a request being made by the wireless-LAN-system creating communication apparatus.
(13) The communication apparatus according to (12), in which
   the communication apparatus receives, from the wireless-LAN-system creating communication apparatus, a list of the access points with which the pieces of security information are shared.
(14) The communication apparatus according to (13), in which
   the list is included in an association request or an authentication request.
(15) The communication apparatus according to any one of (12) to (14), in which
   the communication apparatus generates the security information and transmits the generated security information to the access points.
(16) The communication apparatus according to any one of (12) to (15), in which
   the management section manages pieces of information regarding at least two of the access points having the same service set identifier.
(17) The communication apparatus according to any one of (12) to (15), in which
   the management section manages pieces of information regarding at least two of the access points having an extended service set identifier.
(18) The communication apparatus according to any one of (12) to (17), in which
   the access points are situated in a range in which the access points are connected to each other through a cable.
(19) The communication apparatus according to any one of (12) to (18), in which
   when there is a change in a configuration of the access points situated around the wireless-LAN-system creating communication apparatus, the communication apparatus receives, from the wireless-LAN-system creating communication apparatus, a list of the access points newly connectable by the wireless-LAN-system creating communication apparatus, and
   the communication apparatus updates the pieces of security information managed by the management section to the pieces of security information regarding the access points included in the list.
(20) A communication method that is performed by a communication apparatus that controls communication performed by an access point that creates a wireless LAN system, the communication method including
   managing pieces of security information regarding the access points in response to a request being made by the communication apparatus.

### Reference Signs List

- 11: controller
- 21: router
- 22: provider
- 23: Internet
- 30: communication terminal
- 31: network connection module
- 32: information input module
- 33: apparatus control module
- 34: information output module
- 35: wireless communication module
- 51: interface
- 52: transmission buffer
- 53: AP connection managing section
- 54: data frame constructing section
- 55: security information managing section
- 56: control frame setting section
- 57: transmission signal processing section
- 58: access control section
- 59: antenna section
- 60: reception signal processing section
- 61: control frame determining section
- 62: data frame analyzer
- 63: reception buffer
- 101: entity

## Claims

1. A communication apparatus, comprising:
a communication section that communicates with an access point that creates a wireless local-area-network (LAN) system;
a management section that manages pieces of security information regarding a plurality of the access points connectable by the communication apparatus; and
a roaming processing section that switches, upon roaming, the access point corresponding to a connection destination, using the pieces of security information managed by the management section.

2. The communication apparatus according to claim 1, wherein
the communication apparatus transmits, to an entity, a request that includes the plurality of the access points with which the pieces of security information are shared.

3. The communication apparatus according to claim 2, wherein
the request is transmitted using an association request.

4. The communication apparatus according to claim 2, wherein
the request is transmitted using an authentication request.

5. The communication apparatus according to claim 2, wherein
the security information is supplied by the entity.

6. The communication apparatus according to claim 1, wherein
the management section manages pieces of information regarding at least two of the access points having the same service set identifier.

7. The communication apparatus according to claim 1, wherein
the management section manages pieces of information regarding at least two of the access points having an extended service set identifier.

8. The communication apparatus according to claim 1, wherein
the plurality of the access points is situated in a range in which the access points of the plurality of the access points are connected to each other through a cable.

9. The communication apparatus according to claim 1, wherein
the communication section communicates with one of the plurality of the access points for which the pieces of security information are managed by the management section.

10. The communication apparatus according to claim 1, wherein
when there is a change in a configuration of the access points situated around the communication apparatus, the management section manages the pieces of security information regarding a plurality of the access points having become newly connectable by the communication apparatus.

11. A communication method that is performed by a communication apparatus including a communication section that communicates with an access point that creates a wireless LAN system, the communication method comprising:
managing pieces of security information regarding a plurality of the access points connectable by the communication apparatus; and
switching, upon roaming, the access point corresponding to a connection destination, using the pieces of managed security information.

12. A communication apparatus, comprising:
a communication section that communicates with a communication apparatus that creates a wireless local-area-network (LAN) system; and
a management section that manages pieces of security information regarding access points in response to a request being made by the wireless-LAN-system creating communication apparatus.

13. The communication apparatus according to claim 12, wherein
the communication apparatus receives, from the wireless-LAN-system creating communication apparatus, a list of the access points with which the pieces of security information are shared.

14. The communication apparatus according to claim 13, wherein
the list is included in an association request or an authentication request.

15. The communication apparatus according to claim 12, wherein
the communication apparatus generates the security information and transmits the generated security information to the access points.

16. The communication apparatus according to claim 12, wherein
the management section manages pieces of information regarding at least two of the access points having the same service set identifier.

17. The communication apparatus according to claim 12, wherein
the management section manages pieces of information regarding at least two of the access points having an extended service set identifier.

18. The communication apparatus according to claim 12, wherein
the access points are situated in a range in which the access points are connected to each other through a cable.

19. The communication apparatus according to claim 12, wherein
when there is a change in a configuration of the access points situated around the wireless-LAN-system creating communication apparatus, the communication apparatus receives, from the wireless-LAN-system creating communication apparatus, a list of the access points newly connectable by the wireless-LAN-system creating communication apparatus, and
the communication apparatus updates the pieces of security information managed by the management section to the pieces of security information regarding the access points included in the list.

20. A communication method that is performed by a communication apparatus that controls communication performed by an access point that creates a wireless LAN system, the communication method comprising
managing pieces of security information regarding the access points in response to a request being made by the communication apparatus.
